(19) Europäisches Patentamt / European Patent Office / Office européen des brevets

(11) **EP 4 358 190 A1**

(12) **EUROPEAN PATENT APPLICATION**
published in accordance with Art. 153(4) EPC

(43) Date of publication:
**24.04.2024 Bulletin 2024/17**

(21) Application number: **22825028.8**

(22) Date of filing: **15.06.2022**

(51) International Patent Classification (IPC):
$H01M\ 4/587$ (2010.01)  $C01B\ 32/205$ (2017.01)
$H01M\ 4/36$ (2006.01)

(52) Cooperative Patent Classification (CPC):
**C01B 32/205; H01M 4/36; H01M 4/587;**
Y02E 60/10

(86) International application number:
**PCT/JP2022/023950**

(87) International publication number:
**WO 2022/265040 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021 JP 2021101703**

(71) Applicant: **ENEOS Corporation**
**Chiyoda-ku**
**Tokyo 100-8162 (JP)**

(72) Inventors:
• **SUZUKI, Takashi**
  **Tokyo 100-8162 (JP)**

• **HIROKI, Toshiyuki**
  **Tokyo 100-8162 (JP)**
• **WANG, Zhen**
  **Tokyo 100-8162 (JP)**
• **IKAI, Keizo**
  **Tokyo 100-8162 (JP)**
• **KIUCHI, Noriyuki**
  **Tokyo 100-8162 (JP)**
• **SHIRAI, Takahiro**
  **Tokyo 100-8162 (JP)**

(74) Representative: **Gilani, Anwar**
**Venner Shipley LLP**
**Byron House**
**Cambridge Business Park**
**Cowley Road**
**Cambridge CB4 0WZ (GB)**

(54) **METHOD FOR PRODUCING ARTIFICIAL GRAPHITE MATERIAL FOR LITHIUM ION SECONDARY BATTERY NEGATIVE ELECTRODES, ARTIFICIAL GRAPHITE MATERIAL FOR LITHIUM ION SECONDARY BATTERY NEGATIVE ELECTRODES, NEGATIVE ELECTRODE FOR LITHIUM ION SECONDARY BATTERIES, AND LITHIUM ION SECONDARY BATTERY**

(57)     A method for producing an synthetic graphite material for lithium-ion secondary battery negative electrodes, including a step of performing a coking treatment on a raw material oil composition by carrying out a delayed coking process to generate a raw coke composition, a step of performing a heat treatment on the raw coke composition to obtain a heat-treated raw coke composition, a step of crushing the heat-treated raw coke composition to obtain heat-treated raw coke powder, a step of coating the heat-treated raw coke powder with a coating material to obtain coated heat-treated raw coke powder, and a step of graphitizing the coated heat-treated raw coke powder to obtain an synthetic graphite material for lithium-ion secondary battery negative electrodes, in which a specific surface area of the heat-treated raw coke powder is 10.5 $m^2$/g or greater.

FIG. 1

**Description**

[Technical Field]

The present invention relates to a method for producing an synthetic graphite material for lithium-ion secondary battery negative electrodes, an synthetic graphite material for lithium-ion secondary battery negative electrodes, a negative electrode for lithium-ion secondary batteries, and a lithium-ion secondary battery.

Priority is claimed on Japanese Patent Application No. 2021-101703, filed on June 18, 2021, the content of which is incorporated herein by reference.

[Background Art]

Lithium-ion secondary batteries are used for industrial purposes such as applications for automobiles and power storage of system infrastructures.

As a negative electrode material of a lithium-ion secondary battery, graphite such as an synthetic graphite material has been used (see, for example, Patent Document 1).

Particularly quick charging characteristics have been required after lithium-ion secondary batteries have started to be used as a part of social infrastructure. The reason for this, for example, in a case where lithium-ion secondary batteries are used for electric vehicle (BEV) applications, (i) the operation rate of the power supply stand decreases as the time required for fully charging the battery, and (ii) the cruising distance per charge can be extended due to improvement of regeneration efficiency (reduction in electricity consumption) of the brake energy, and thus the convenience for users is improved.

Further, even in a case where lithium-ion secondary batteries are used for system cooperation applications of natural energy, since storage efficiency of natural energy increases as an allowable charging current increases, the batteries can contribute to improvement of the power generation capacity thereof.

However, in a lithium-ion secondary battery obtained by using graphite as a negative electrode material, there is a problem in that lithium metal is likely to be deposited on the negative electrode due to quick charging. In a case where lithium metal is deposited on the negative electrode, the amount of lithium ions that can move between the positive electrode and the negative electrode decreases. Therefore, the capacity of the lithium-ion secondary battery is degraded.

In a case where a lithium-ion secondary battery obtained by using a graphite material for a negative electrode is quickly charged with a large current, a problem of degradation of cycle characteristics occurs due to electrodeposition of lithium metal on the surface of graphite particles of the negative electrode, and thus various countermeasures for this problem have been taken from the past.

For example, in a non-aqueous electrolyte battery described in Patent Document 2, a combination of a positive electrode formed of a positive electrode active material having an olivine type crystal structure and a negative electrode to which inorganic oxide nanoparticles are added is used. In this manner, Patent Document 2 discloses that deposition of Li on the surface of the negative electrode during quick charging, which is the problem of the battery having an olivine-based positive electrode, can be suppressed by improving the Li acceptability to the negative electrode, and thus the cycle characteristics at a high load can be dramatically improved.

Further, in a method for producing a negative electrode material for lithium-ion secondary batteries described in Patent Document 3, a production method of crushing and classifying a carbon precursor, coating the carbon precursor with optically isotropic coal-based pitch, and sintering and graphitizing the carbon precursor has been suggested. In this manner, Patent Document 3 discloses that a high-performance negative electrode material for lithium-ion secondary batteries which has a high capacity and less discharge loss, is capable of charging a battery with a large amount of negative electrode material at a high bulk density, and is also capable of quick charging can be provided.

Further, in a method for producing graphite powder described in Patent Document 4, a production method of coating powder of a carbonized material before graphitization with a resin such as a phenol resin, a furan resin, an epoxy resin, a polyimide resin, or an acrylic resin and graphitizing the powder has been suggested. In this manner, Patent Document 4 discloses that the method of stably producing graphite powder suitable for a negative electrode material for lithium-ion secondary batteries at a relatively low cost which has a high discharge capacity of greater than 340 mAh/g, which is considerably close to the theoretical capacity, and has a high charge-discharge efficiency of 80% or greater and preferably 90% or greater can be provided.

Further, Patent Document 5 discloses a negative electrode material for lithium-ion secondary batteries which is obtained by coating the surface of graphite particles serving as a core with amorphous carbon. This coating method is a method of kneading graphite particles serving as a core and pitch while applying a mechanical impact to disperse and immobilize amorphous carbon on the surface of the graphite particles, and performing a heat treatment. Patent Document 5 discloses that in the negative electrode material for lithium-ion secondary batteries, active portions on the surface of graphite particles serving as a core suppress a decrease in the capacity due to a new protective coating film formed by consumption of an electrolyte solution and lithium ions and have excellent rate characteristics of amorphous carbon.

Further, Patent Document 6 suggests a composite graphite material having a low crystalline graphite layer on the surface of high crystalline graphite particles serving as a core. Patent Document 6 discloses that the composite graphite material is obtained by performing a mechanochemical treatment on a graphite precursor containing graphite serving as a core and graphitizing the graphite precursor and has high rate characteristics while maintaining a high reversible capacity.

[Citation List]

[Patent Document]

[Patent Document 1] Japanese Patent No. 5415684
[Patent Document 2] Japanese Unexamined Patent Application, First Publication No. 2009-54469
[Patent Document 3] Japanese Unexamined Patent Application, First Publication No. 2003-151551
[Patent Document 4] Japanese Unexamined Patent Application, First Publication No. 2003-132884
[Patent Document 5] Japanese Patent No. 5062596
[Patent Document 6] Japanese Patent No. 4666876

[Summary of Invention]

[Technical Problem]

In recent years, lithium-ion secondary batteries have started to be used as social infrastructure such as electric vehicle applications and system cooperation applications of natural energy. Therefore, there is a demand for a lithium-ion battery suitable for larger current charge acceptability and a negative electrode graphite material thereof. In the negative electrode prepared by using a negative electrode graphite material of the related art as described above, the large current charge acceptability and the like are still insufficient in response to the demand.

Further, in the lithium-ion secondary battery having a negative electrode that contains a negative electrode material of the related art described above, since a part of the coating material falls off in a case where quick charging and discharging are repeated, and high crystalline graphite particles serving as a core, that is, the surfaces of highly active graphite particles are newly exposed, the capacity is decreased due to a protective coating film newly formed by consumption of an electrolyte solution and lithium-ions, and thus there is room for further improvement.

The composite graphite material described in Patent Document 6 is required to contain graphite as a core and to use refined natural graphite having high crystallinity of synthetic graphite graphitized by being subjected to a heat treatment at a temperature close to 3000°C as a raw material. Further, a step of performing a mechanochemical treatment on the particles serving as a core and the graphite precursor and performing a heat treatment at a temperature close to 3000°C is required, which leads to an increase in energy consumption and production cost during production.

The present invention has been made in consideration of the above-described circumstances, and an object thereof is to provide a method for producing an synthetic graphite material for lithium-ion secondary battery negative electrodes, capable of preparing a negative electrode for lithium-ion secondary batteries in which the discharge capacity is difficult to degrade even in a case where the charge and discharge cycle is repeated with a large current, an synthetic graphite material for lithium-ion secondary battery negative electrodes which is obtained by the production method, a negative electrode for lithium-ion secondary batteries which is prepared by using the graphite material, and a lithium-ion secondary battery including the negative electrode.

[Solution to Problem]

As a result of intensive examination repeatedly conducted by the present inventors, it was found that in a case where heat-treated raw coke powder with a relatively large specific surface area is prepared and the heat-treated raw coke powder is coated with a coating material, since the contact area between the heat-treated raw coke powder and the coating material is large and a strong bond is likely to be formed, lithium-ions can be diffused in a graphite material (between a phase derived from the coating material and a phase derived from the heat-treated raw coke powder) at a high speed even in the graphite material to be finally obtained, and degradation of the discharge capacity is suitably suppressed by using the graphite material for the negative electrode of the lithium-ion secondary battery even in a case where the charge and discharge cycle is repeated with a large current, thereby completing the present invention.

Specifically, the present invention employs the following configurations.

[1] A method for producing an synthetic graphite material for lithium-ion secondary battery negative electrodes, including: a step of performing a coking treatment on a raw material oil composition by carrying out a delayed coking process to generate a raw coke composition; a step of performing a heat treatment on the raw coke composition to obtain a heat-treated raw coke composition; a step of crushing the heat-treated raw coke composition to obtain heat-treated raw coke powder; a step of coating the heat-treated raw coke powder with a coating material to obtain coated heat-treated raw coke powder; and a step of graphitizing the coated heat-treated raw coke powder to obtain an synthetic graphite material for lithium-ion secondary battery negative electrodes, in which a nitrogen adsorption specific surface area of the heat-treated raw coke powder is 10.5 m$^2$/g or greater.

[2] The method for producing an synthetic graphite material for lithium-ion secondary battery negative electrodes, in which a volatile content of the heat-treated raw coke powder is less than 3.71%, and a true density of the heat-treated raw coke powder is greater than 1.22 g/cm$^3$ and less than 1.73 g/cm$^3$.

[3] The method for producing an synthetic graphite material for lithium-ion secondary battery negative electrodes according to [1] or [2], in which a temperature of the heat treatment in the step of obtaining the heat-treated raw coke composition is 500°C or higher and 700°C or lower.

[4] The method for producing an synthetic graphite material for lithium-ion secondary battery negative electrodes according to any one of [1] to [3], in which a amount of normal paraffin in the raw material oil composition is in a range of 5% to 20% by mass with respect to a total amount of the raw material oil composition, and an aromatic index fa determined by a Knight method is in a range of 0.3 to 0.65.

[5] An synthetic graphite material for lithium-ion secondary battery negative electrodes, which is obtained by the production method according to any one of [1] to [4].

[6] A negative electrode for lithium-ion secondary batteries, including: the synthetic graphite material for lithium-ion secondary battery negative electrodes according to [5].

[7] A lithium-ion secondary battery including: the negative electrode for lithium-ion secondary batteries according to [6].

[Advantageous Effects of Invention]

According to the present invention, it is possible to provide a method for producing an synthetic graphite material for lithium-ion secondary battery negative electrodes, capable of preparing a negative electrode for lithium-ion secondary batteries in which the discharge capacity is difficult to degrade even in a case where the charge and discharge cycle is repeated with a large current, an synthetic graphite material for lithium-ion secondary battery negative electrodes which is obtained by the production method, a negative electrode for lithium-ion secondary batteries which is prepared by using the graphite material, and a lithium-ion secondary battery including the negative electrode.

[Brief Description of Drawings]

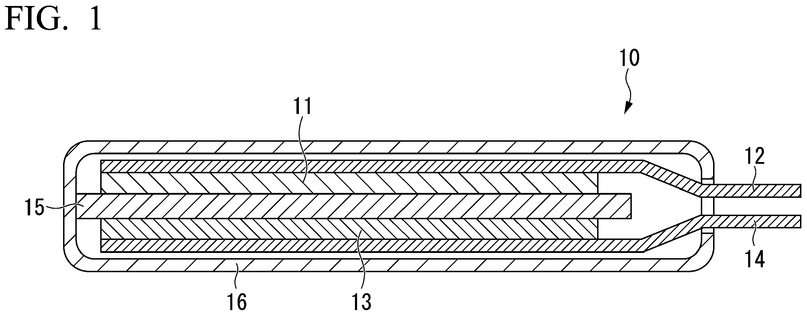

FIG. 1 is a schematic cross-sectional view showing an example of a lithium-ion secondary battery according to the present invention.

[Description of Embodiments]

Hereinafter, a method for producing an synthetic graphite material for lithium-ion secondary battery negative electrodes, an synthetic graphite material for lithium-ion secondary battery negative electrodes, a negative electrode for lithium-ion secondary batteries, and a lithium-ion secondary battery according to the present invention will be described in detail. Further, the present invention is not limited to the embodiments described below.

(Method for producing synthetic graphite material for lithium-ion secondary battery negative electrodes)

A method for producing an synthetic graphite material for lithium-ion secondary battery negative electrodes according to the present embodiment includes a step of performing a coking treatment on a raw material oil composition by carrying out a delayed coking process to generate a raw coke composition (hereinafter, also referred to as "step A"), a step of performing a heat treatment on the raw coke composition to obtain a heat-treated raw coke composition (hereinafter, also referred to as "step B"), a step of crushing the heat-treated raw coke composition to obtain heat-treated raw coke powder (hereinafter, also referred to as "step C"), a step of coating the heat-treated raw coke powder with a coating material to obtain coated heat-treated raw coke powder (hereinafter, also referred to as "step D"), and a step of graphitizing the coated heat-treated raw coke powder to obtain an synthetic graphite material for lithium-ion secondary battery negative electrodes (hereinafter, also referred to as "step E").

<In regard to step A>

The step A is a step of performing a coking treatment on a raw material oil composition by carrying out a delayed coking process to generate a raw coke composition.

Specific examples of the raw material oil composition in the step A include heavy oil.

Examples of the heavy oil include bottom oil (FCC DO) of fluid catalytic cracking oil, heavy oil subjected to an advanced hydrodesulfurization treatment, vacuum distillation residual oil (VR), liquefied coal oil, solvent extracted coal oil, atmospheric distillation residual oil, shale oil, tar sands bitumen, naphtha tar pitch, coal tar pitch, and ethylene bottom oil.

Further, as the raw material oil composition in the step A, the heavy oil subjected to various treatments such as hydrorefining may be employed.

Among the examples described above, it is preferable to use, as the raw material oil composition in the step A, heavy oil which contains an appropriate aromatic component and appropriate normal paraffin and is subjected to an advanced hydrodesulfurization treatment.

Further, in a case where the raw material oil composition contains heavy oil, the heavy oil may be used alone or in the form of a mixture of two or more kinds thereof. In a case where two or more kinds of heavy oils are mixed and used as the raw material oil composition, the blending ratio of each heavy oil can be adjusted as appropriate according to the properties of each heavy oil. Further, the properties of each heavy oil vary depending on the kind of crude oil, the conditions of the treatment carried out until heavy oil is obtained from the crude oil, and the like.

Among the examples described above, heavy oil which contains a component generating a satisfactory bulk mesophase during the coking treatment and a component generating gas that reduces the size of the bulk mesophase in a case where the bulk mesophase is polycondensed to be carbonized and solidified is preferable as the raw material oil composition in the step A.

<<Component generating satisfactory bulk mesophase during coking treatment>>

Examples of the component that generates a satisfactory bulk mesophase during the coking treatment include a component in which the aromatic index fa determined by a Knight method is in a predetermined range. Specifically, a component having an aromatic index fa of 0.30 to 0.65 determined by the Knight method is preferable, a component having an aromatic index fa of 0.35 to 0.60 is more preferable, and a component having an aromatic index fa of 0.40 to 0.55 is still more preferable as the component.

In the present specification, the term "aromatic index fa" is an aromatic carbon fraction determined by the Knight method.

In the Knight method, the carbon distribution is divided into three components (A1, A2, and A3) as a spectrum of aromatic carbon by the $^{13}$C-NMR method. Here, A1 represents the number of carbon atoms inside the aromatic ring (half of the substituted aromatic carbon atoms and the non-substituted aromatic carbon atoms (corresponding to the peak in a range of approximately 40 to 60 ppm of $^{13}$C-NMR)), A2 represents the number of the other half of the non-substituted remaining aromatic carbon atoms (corresponding to the peak in a range of approximately 60 to 80 ppm of $^{13}$C-NMR), and A3 represents the number of aliphatic carbon atoms (corresponding to the peak in a range of approximately 130 to 190 ppm of $^{13}$C-NMR). The aromatic index fa is determined by "fa = (A1 + A2)/(A1 + A2 + A3)" using A1, A2, and A3. For example, the document ("Characterization of Pitch II. Chemical Structure", Yokono and Sanada, (Carbon, 1981 (No. 105)), pp. 73 to 81) describes that the $^{13}$C-NMR method is the best method of quantitatively determining fa, which is the most basic amount of chemical structure parameters of pitches.

<<Component generating gas that reduces size of bulk mesophase in case where bulk mesophase is polycondensed to be carbonized and solidified>>

Specific examples of the component generating gas that reduces the size of the bulk mesophase in a case where the bulk mesophase is polycondensed to be carbonized and solidified include normal paraffin.

The amount of normal paraffin in the raw material oil composition in the step A is preferably in a range of 5% to 20% by mass and more preferably in a range of 10% to 15% by mass with respect to the total amount of the raw material oil composition.

In the present specification, "amount of normal paraffin" denotes a value measured by a gas chromatograph equipped with a capillary column. Specifically, the measurement is performed by passing a sample of a non-aromatic component separated by an elution chromatography method through the capillary column after verification with a standard substance of normal paraffin. The amount of normal paraffin with respect to the total amount of the raw material oil composition can be calculated from the measured value.

The normal paraffin contained in the raw material oil composition generates gas during the coking treatment. The gas plays an important role of limiting the size of the bulk mesophase generated during the coking treatment to a small size and limiting the size of the mesophase to a small size. In addition, the gas generated during the coking treatment also has a function of uniaxially aligning adjacent mesophases limited to have a small size to form a fine structure having a selective aligning property.

In a case where the amount of normal paraffin in the raw material oil composition is 5% by mass or greater, the bulk mesophase is suppressed from growing more than necessary, and a carbon hexagonal reticulated plane laminate having an appropriate size is likely to be formed.

Further, in a case where the amount of normal paraffin in the raw material oil composition is 20% by mass or less, the amount of gas to be generated from the normal paraffin is more appropriate.

It is not preferable that gas is excessively generated during the coking treatment from the viewpoint that unevenness of the outermost surface of the particles occurring due to the crushing after the heat treatment performed on the raw coke composition is likely to largely grow and atoms on the outermost surface of the particles even after graphitization are difficult to realign to have a surface superstructure suitable for quick charging.

As the raw material oil composition in the step A among the examples described above, the aromatic index fa determined by the Knight method is preferably in a range of 0.30 to 0.65, more preferably in a range of 0.35 to 0.60, and still more preferably in a range of 0.40 to 0.55.

In a case where the aromatic index fa of the raw material oil composition in the step A is 0.3 or greater, unevenness is more likely to be formed on the surface of the heat-treated raw coke powder as appropriate due to the combination of the heat treatment of the raw coke composition and the subsequent crushing treatment, and a surface structure suitable for quick charging is more likely to be introduced to the surface of the particles after the graphitization. Further, in a case where the heat-treated raw coke powder having such appropriate unevenness is used, the heat-treated raw coke powder and the coating material can be strongly bonded to each other using an effect of increasing the surface area as appropriate in the step D described below. In this manner, in the lithium-ion secondary battery having a negative electrode that contains an synthetic graphite material for lithium-ion secondary battery negative electrodes to be finally obtained, the coating material is unlikely to fall off even in a case where quick charging is repeated, and the discharge capacity is unlikely to be degraded.

Meanwhile, it is not preferable that the aromatic index fa is extremely small from the viewpoint that unevenness occurring due to the crushing after the heat treatment performed on the raw coke composition is likely to largely grow and the atoms on the outermost surfaces of the particles are unlikely to be realigned in a surface superstructure suitable for quick charging even after the graphitization.

Further, it is preferable that the aromatic index fa is 0.65 or less from the viewpoint that the size of the bulk mesophase is likely to be limited to a small size by the gas generated during the coking treatment.

On the contrary, in a case where the aromatic index fa is extremely large, a large number of mesophases are rapidly generated in the matrix during the coking treatment, and the speed of coalescence between the mesophases is faster than the single growth speed of the mesophase. As a result, the effect of reducing the size of the bulk mesophase due to the gas generated during the coking treatment is unlikely to be obtained, and thus the size of the bulk mesophase is difficult to limit to a small size, which is not preferable.

As described above, the amount of normal paraffin in the raw material oil composition in the step A is preferably in a range of 5% to 20% by mass and more preferably in a range of 10% to 15% by mass with respect to the total amount of the raw material oil composition, and the aromatic index fa determined by the Knight method is preferably in a range of 0.3 to 0.65, more preferably in a range of 0.35 to 0.60, and still more preferably in a range of 0.40 to 0.55.

Further, heavy oil in which the amount of normal paraffin and the aromatic index fa are in the above-described ranges and on which an advanced hydrodesulfurization treatment has been performed is preferable as the raw material oil composition in the step A.

Further, a raw material oil composition in which the amount of normal paraffin and the aromatic index fa are in the above-described ranges and which has a density D of 0.91 to 1.02 $g/cm^3$ is more preferable, and a raw material oil composition which further has a viscosity V of 10 to 220 $mm^2/s$ is still more preferable as the raw material oil composition in the step A.

<<Coking treatment>>

As a method of performing the coking treatment on the raw material oil composition by performing a delayed coking process in the step A, for example, a known method described in Japanese Patent No. 5415684 can be used. The method of performing the coking treatment on the raw material oil composition by performing a delayed coking process is markedly suitable for mass production of raw materials for high-quality synthetic graphite materials.

In the step A, a delayed coking process is used as the method of performing the coking treatment on the raw material oil composition. By performing the coking treatment, thermal cracking and the polycondensation reaction of the raw material oil composition occur, and a large liquid crystal that is referred to as a mesophase is generated as an intermediate product, thereby obtaining a raw coke composition.

As the conditions for the delayed coker, for example, the pressure is preferably in a range of 0.1 to 0.8 MPa and more preferably in a range of 0.2 to 0.6 MPa.

Further, the temperature is preferably in a range of 400°C to 600°C and more preferably in a range of 490°C to 540°C.

In the production method of the present embodiment, the size of the carbon hexagonal reticulated plane constituting the mesophase is controlled by the gas generated from the raw material oil composition during the coking treatment. Therefore, the residence time of the gas generated from the raw material oil composition during the coking treatment in the system is an important control parameter for determining the size of the carbon hexagonal reticulated plane. The residence time of the gas generated during the coking treatment in the system can be adjusted by the pressure during the coking treatment.

Therefore, in a case where the pressure in the coking treatment is in the above-described preferable ranges, the release rate of the gas to be generated from the raw material oil composition to the outside of the system is easily limited.

Further, in a case where the temperature in the coking treatment is in the above-described preferable ranges, a more satisfactory mesophase can be grown from the raw material oil composition adjusted to obtain the effects of the present invention.

On the contrary, in a case where the temperature in the coking treatment is extremely low and the pressure is extremely high, the amount of gas generated during the coking treatment is insufficient, and the crystal structure of the raw coke composition extremely grows. In this case, pores having openings are unlikely to be formed in the particle surface of the heat-treated raw coke composition prepared by the heat treatment in the step B described below and the unevenness is unlikely to be formed on the particle surface, which is not preferable.

Further, in a case where the temperature in the coking treatment is extremely high and the pressure is extremely low, the amount of gas generated during the coking treatment is excessive, the graphite crystal structure is unlikely to grow even after the heat treatment in the subsequent graphitization step, and the high capacity is not expressed. Therefore, the systhetic graphite material for lithium-ion secondary battery negative electrodes is not preferable.

The raw coke composition in the step A is a composition containing raw coke.

<In regard to step B>

The step B is a step of performing a heat treatment on the above-described raw coke composition to obtain a heat-treated raw coke composition.

As the heat treatment in the step B, for example, a heat treatment is performed in an atmosphere of inert gas such as nitrogen, argon, or helium.

Here, the atmospheric gas may contain 0.01% to 21% by volume of oxygen gas with respect to the total amount of the atmospheric gas.

Examples of the heat treatment include a method of charging a sheath with a raw coke composition and applying a roller hearth kiln and a method of directly charging a rotary kiln with a raw coke composition.

In the method for producing an synthetic graphite material for lithium-ion secondary battery negative electrodes according to the present embodiment, the nitrogen adsorption specific surface area (hereinafter, also simply referred to as "specific surface area") of the heat-treated raw coke powder is correlated with the heat treatment temperature (highest reach temperature) and the heat treatment time (holding time of the highest reach temperature) of the raw coke composition.

As a general tendency, the specific surface area of the heat-treated raw coke composition and the heat-treated raw coke powder obtained from the heat-treated raw coke composition increases as the heat treatment temperature increases, the heat treatment time increases, or the amount of oxygen in the heat-treated atmospheric gas increases.

The heat treatment temperature and the heat treatment time of the raw coke composition or the amount of oxygen in the heat-treated atmospheric gas is required to be set such that the specific surface area of the heat-treated raw coke powder is 10.5 cm$^2$/g or greater.

In the present specification, "specific surface area" is a nitrogen adsorption specific surface area measured and calculated in conformity with "Determination of the Specific Surface Area of Powders (Solids) by Gas Adsorption-BET Method" of JIS Z 8830 (2013).

In the method for producing an synthetic graphite material for lithium-ion secondary battery negative electrodes according to the present embodiment, the volatile content and the true density of the heat-treated raw coke powder are correlated with the heat treatment temperature (highest reach temperature) and the heat treatment time (holding time of the highest reach temperature) of the raw coke composition.

As a general tendency, the volatile content of the heat-treated raw coke composition and the heat-treated raw coke powder obtained from the composition decreases and the true density thereof increases as the heat treatment temperature increases or the heat treatment time increases.

It is preferable that the heat treatment temperature and the heat treatment time of the raw coke composition are set such that the volatile content of the heat-treated raw coke powder is less than 3.71% and the true density of the heat-treated raw coke powder is greater than 1.22 g/cm$^3$ and less than 1.73 g/cm$^3$.

From the viewpoint that the volatile content and the true density of the heat-treated raw coke powder are easily adjusted to be in the above-described ranges, the heat treatment time can be shortened, and the production cost can be reduced, the lower limit of the highest reach temperature in the step B is preferably 450°C or higher, more preferably 500°C or higher, and still more preferably 550°C or higher.

From the viewpoint that the volatile content and the true density of the heat-treated raw coke powder are easily adjusted to be in the above-described ranges and the quality stability of the heat-treated raw coke composition and the heat-treated raw coke powder can be further improved, the upper limit of the highest reach temperature in the step B is preferably 750°C or lower, more preferably 700°C or lower, and still more preferably 650°C or lower.

For example, the highest reach temperature in the step B is preferably in a range of 450°C to 750°C, more preferably in a range of 500°C to 700°C, and still more preferably in a range of 550°C to 650°C.

In a case where the heat treatment temperature is extremely low, it takes a long time to perform the step, and the production cost increases unnecessarily, which is not preferable. Further, in a case where the heat treatment temperature is extremely high, the variation in the specific surface area and the properties (the volatile content and the true density) of the heat-treated raw coke composition and the heat-treated raw coke powder increases, which is not preferable from the viewpoint of the quality stability.

From the viewpoint that the volatile content and the true density of the heat-treated raw coke powder are likely to be adjusted to be in the above-described ranges and the quality stability of the heat-treated raw coke composition and the heat-treated raw coke powder can be improved, the lower limit of the holding time of the highest reach temperature in the step B is preferably 0.1 hours or longer, more preferably 0.2 hours or longer, and still more preferably 0.5 hours of longer.

From the viewpoint that the volatile content and the true density of the heat-treated raw coke powder are likely to be adjusted to be in the above-described ranges and the production cost can be further suppressed, the upper limit of the holding time of the highest reach temperature in the step B is preferably 3 hours or shorter, more preferably 2 hours or shorter, and still more preferably 1 hour or shorter.

For example, the holding time of the highest reach temperature in the step B is preferably in a range of 0.1 to 3 hours, more preferably in a range of 0.2 to 2 hours, and still more preferably in a range of 0.5 to 1 hour.

<In regard to step C>

The step C is a step of crushing the above-described heat-treated raw coke composition to obtain heat-treated raw coke powder.

The specific surface area of the heat-treated raw coke powder obtained in the step C is 10.5 m$^2$/g or greater.

Further, the volatile content is preferably less than 3.71%, and the true density is preferably greater than 1.22 g/cm$^3$ and less than 1.73 g/cm$^3$.

The specific surface area of the heat-treated raw coke powder is controlled by the step B as described above, and the influence of the crushing conditions in the step C is small. Further, the volatile content and the true density of the heat-treated raw coke powder are also controlled by the step B as described above, and the influence of the crushing conditions in the step C is small.

In the present specification, "volatile content" is the volatile content [mass fraction (%)] to be calculated in conformity with "b) In case of cokes" of "7.2 Vertical tubular electric furnace method" of "7. Volatile content quantification method" described in "Coal and coke-methods for proximate analysis" of JIS M 8812 (2004).

In the present specification, "true density" is the true density [g/cm$^3$] to be calculated in conformity with "7.3 True density test method" of "7. Density/pore ratio test method" described in "Coke-test method" of JIS K 2151 (2004).

The true density of the raw coke composition generated by the coking treatment through the delayed coking process performed on the raw material oil composition is typically in a range of 1.1 to 1.4 g/cm$^3$, and the volatile content is typically in a range of 5% to 15% (see, for example, "Journal of The Fuel Society of Japan", Vol. 58, No. 642 (1979), pp. 257 to 263). As a general change due to the heat treatment performed on the raw coke composition having such properties, the volatile content is decreased and the true density is improved. The reason why the volatile content decreases is that the volatile content contained in the raw coke composition is a reaction product of the raw material oil composition remaining in a state where the thermal cracking and the polycondensation reaction are insufficient in the delayed coking process, and thus the volatile content scatters due to the subsequent heat treatment. The reason why the true density is improved is that the thermal cracking and the polycondensation reaction further proceed due to the heat treatment.

In a case where the volatile content of the heat-treated raw coke powder obtained by performing the heat treatment on the raw coke composition having such characteristics and crushing the raw coke composition is controlled to less than 3.71% and the true density of the heat-treated raw coke powder is controlled to greater than 1.22 $g/cm^3$ and less than 1.73 $g/cm^3$, the specific surface area of the heat-treated raw coke powder is increased to 10.5 $m^2/g$ or greater, the contact area with the coating material is increased, and as a result, lithium ions can be diffused in the graphitized graphite powder at a high speed.

In a case where the volatile content of the heat-treated raw coke powder is less than 3.71%, evaporation paths of the volatile content, that is, curved pores with various sizes are formed in the surface of the heat-treated raw coke powder and the internal bulk. Further, pores with small diameters grow as cavities (cracks) due to the mechanical energy generated by the crushing, and pores with large diameters are cut (crushed) after the growth as cavities. As a result, in the heat-treated raw coke powder, pores having openings are formed on the particle surface and unevenness is formed on the particle surface.

The heat-treated raw coke powder obtained in the step C has a specific surface area of 10.5 $m^2/g$ or greater, preferably 11 $m^2/g$ or greater, more preferably 11.5 $m^2/g$ or greater, still more preferably 12 $m^2/g$ or greater, and particularly preferably 20 $m^2/g$ or greater.

Further, the heat-treated raw coke powder obtained in the step C has a specific surface area of preferably 120 $m^2/g$ or less, more preferably 100 $m^2/g$ or less, and still more preferably 95 $m^2/g$ or less.

For example, the heat-treated raw coke powder obtained in the step C has a specific surface area of preferably 10.5 $m^2/g$ or greater and 120 $m^2/g$ or less, more preferably 11 $m^2/g$ or greater and 120 $m^2/g$ or less, still more preferably 11.5 $m^2/g$ or greater and 100 $m^2/g$ or less, particularly preferably 12 $m^2/g$ or greater and 95 $m^2/g$ or less, and most preferably 20 $m^2/g$ or greater and 95 $m^2/g$ or less.

Further, the volatile content of the heat-treated raw coke powder is preferably less than 3.71% and more preferably 0.1% or greater and 3.6% or less.

Further, the true density of the heat-treated raw coke powder is preferably greater than 1.22 $g/cm^3$ and less than 1.73 $g/cm^3$ and more preferably 1.26 $g/cm^3$ or greater and 1.68 $g/cm^3$ or less.

In a case where the heat treatment reaction of the raw coke composition has proceeded excessively, for example, in a case where the volatile content of the heat-treated raw coke powder is less than 0.1% and the true density thereof is greater than 1.68 $g/cm^3$, a hexagonal reticulated plane formed of carbon atom grows excessively, and thus heat-treated raw coke powder having a large specific surface area of 10.5 $m^2/g$ or greater is unlikely to be formed. Therefore, as a result of a decrease in the contact area with the coating material in the subsequent step D, lithium ions cannot be diffused in the synthetic graphite material at a high speed after the graphitization, and thus the discharge capacity in a case where quick charging is repeated may be significantly degraded.

On the contrary, in a case where the heat treatment of the raw coke composition is insufficient, for example, in a case where the volatile content of the heat-treated raw coke powder is greater than 3.6% and the true density thereof is less than 1.26 $g/cm^3$, since only a relatively low-molecular-weight compound in which the thermal cracking reaction and the polycondensation reaction occurring in the delayed coking process are insufficient is evaporated, unevenness with an appropriate size is not introduced to the particle surface of the heat-treated raw coke powder due to the subsequent crushing, and heat-treated raw coke powder having a large specific surface area of 10.5 $m^2/g$ or greater is unlikely to be formed. Even in such a case, as a result of a decrease in the contact area with the coating material in the subsequent step D, lithium ions cannot be diffused in the synthetic graphite material at a high speed after the graphitization, and thus the discharge capacity in a case where quick charging is repeated may be significantly degraded.

Therefore, for the above-described reason, the specific surface area is preferably 10.5 $m^2/g$ or greater. Further, the volatile content of the heat-treated raw coke powder is preferably in a range of 0.1 % to 3.6%, and the true density thereof is preferably in a range of 1.26 to 1.68 $g/cm^3$.

As a crushing method in the step C, a known method such as a method of using a hammer type mill or a method of using an air flow jet mill can be used, and the crushing method is not particularly limited.

The heat-treated raw coke powder obtained in the step C has an average particle diameter of preferably 3 to 40 $\mu$m, more preferably 4 to 20 $\mu$m, and still more preferably 5 to 10 $\mu$m.

In a case where the average particle diameter of the heat-treated raw coke powder is in a range of 3 to 40 $\mu$m, the synthetic graphite material obtained by coating the heat-treated raw coke powder with the coating material and graphitizing the heat-treated raw coke powder has a particle diameter suitable for a negative electrode of a lithium-ion secondary battery.

In a case where the average particle diameter of the heat-treated raw coke powder is extremely small, since the specific surface area of the synthetic graphite material for lithium-ion secondary battery negative electrodes, which is graphitized after coating the heat-treated raw coke powder with the coating material, is excessively increased, the amount of solvent required is extremely large in a case where a paste-like negative electrode mixture used for forming a negative electrode of a lithium-ion secondary battery is prepared, which is not preferable.

On the contrary, in a case where the average particle diameter of the heat-treated raw coke powder is extremely large and in a case where the synthetic graphite material for lithium-ion secondary battery negative electrodes, which is graphitized after coating the heat-treated raw coke powder with the coating material, is used as a negative electrode of a lithium-ion secondary battery, the thickness of the negative electrode is unlikely to be set to 80 $\mu$m or less, and the degree of freedom in design is likely to decrease.

In the present specification, the term "average particle diameter" denotes a value obtained by measuring the particle size distribution using a laser diffraction scattering type particle size distribution measuring device and calculating the obtained measurement result of the particle size distribution in conformity with "Weighted volume-based average diameter" of "4.2.3 Weighted average particle diameter" in "Representation of results of particle size analysis - Part 2: calculation of average particle sizes and moments from particle size distribution" of JIS Z 8819-2 (2001).

The crushing conditions in the step C are set as appropriate such that the average particle diameter of the heat-treated raw coke powder is in a range of 3 to 40 $\mu$m.

The heat-treated raw coke powder obtained in the step C may be classified to have a predetermined particle size.

A known method such as a method of using a classifier can be used as a classification method in the step C, and the method is not particularly limited.

<In regard to step D>

The step (D) is a step of coating the heat-treated raw coke powder with a coating material to obtain coated heat-treated raw coke powder.

In the method for producing an synthetic graphite material for lithium-ion secondary battery negative electrodes according to the present embodiment, since the specific surface area of the heat-treated raw coke powder obtained in the step C is controlled to be relatively large, the contact area between the coating material and the heat-treated raw coke powder is large, and a strong bond (adhesive strength) is formed between the coating material and the heat-treated raw coke powder by an anchor effect due to the unevenness formed on the surface of the heat-treated raw coke powder.

As the coating material, a carbon material having lower crystals than the heat-treated raw coke powder is typically used.

By coating the heat-treated raw coke powder with the coating material, the number of inlets for lithium ions of the synthetic graphite material for lithium-ion secondary battery negative electrodes to be finally obtained can be increased. In this manner, the charge acceptability of lithium ions (lithium metal is difficult to deposit) can be improved.

A typical coating material used for a graphite material for lithium-ion secondary battery negative electrodes can be used without particular limitation as the coating material used for coating the heat-treated raw coke powder.

Examples of the coating material include petroleum-based anisotropic pitch, petroleum-based isotropic pitch, coal-based anisotropic pitch, coal-based isotropic pitch, mesophase pitch, a thermosetting resin (such as a phenol resin, a furan resin, an epoxy resin, or a polyimide resin), and a thermoplastic resin (such as an acrylic resin).

Among the coating materials described above, homogeneous (molecular weight distribution is narrow) petroleum-based anisotropic pitch that is extremely inexpensive and easier to graphitize than resins and is capable of exhibiting high rate characteristics while maintaining a high reversible capacity by graphitization in the step E described below is preferable.

The petroleum-based anisotropic pitch is obtained by heat-treating the petroleum-based isotropic pitch under reduced pressure. Examples of raw materials for the petroleum-based isotropic pitch include bottom oil (FCC DO) of fluid catalytic cracking oil, heavy oil subjected to an advanced hydrodesulfurization treatment, and decompressed residual oil (VR).

The petroleum-based anisotropic pitch is obtained by heat-treating these starting raw material oils in an atmosphere of inert gas such as nitrogen gas, helium gas, or argon gas while being stirred at a temperature of preferably 350°C to 550°C and more preferably 400°C to 500°C for preferably 0.5 to 10 hours and more preferably 0.5 to 3 hours.

Here, the pressure condition may be either under normal pressure or under pressure. Since the heat-treated product has a high softening point and contains an early coking component and a solid content such as an ash content or a catalyst, the mesophase generated by the heat treatment is removed together with these components in the form of a bulk mesophase. In this manner, homogeneous optically isotropic pitch from which the bulk mesophase has been removed is obtained.

Homogeneous (molecular weight distribution is narrow) petroleum-based anisotropic pitch is obtained by heat-treating the isotropic pitch obtained as described above in an inert gas atmosphere under reduced pressure of 10 mmHg or less and preferably 1 to 5 mmHg at a temperature of preferably 350°C to 450°C and more preferably 380°C to 420°C.

The average particle diameter of the coating material is preferably in a range of 1 to 10 $\mu$m and more preferably in a range of 5 to 10 $\mu$m.

In a case where the average particle diameter of the coating material is in a range of 1 to 10 $\mu$m, the surface

of the heat-treated raw coke powder is coated with the coating material as appropriate.

The amount of the coating material to be added in the step D is preferably in a range of 2 to 30 parts by mass, more preferably in a range of 3 to 20 parts by mass, and still more preferably in a range of 3 to 10 parts by mass with respect to 100 parts by mass of the heat-treated raw coke powder.

In a case where the amount of the coating material to be added is in a range of 2 to 30 parts by mass, the surface of the heat-treated raw coke powder is coated with the coating material as appropriate.

Meanwhile, in a case where the amount of the coating material to be added is large, the number of voids in the particles increases due to granulation, and the tap density of the synthetic graphite material for lithium-ion secondary battery negative electrodes after graphitization in the step E described below may decrease.

As a coating method in the step D, a typical method used for a graphite material for lithium-ion secondary battery negative electrodes can be used without particular limitation.

Examples of the coating method include a liquid phase coating method in which heat-treated raw coke powder is immersed in the coating material uniformly melted in a liquid phase or dissolved in a solvent, a chemical vapor deposition method in which a gasified coating material is introduced into a reactor together with a carrier gas to form a thin film on the surface of the heat-treated raw coke powder by a chemical reaction. Among these, a solid phase and semi-liquid phase coating method in which a coating material that has been finely crushed is added to heat-treated raw coke powder and the coating material is mixed in a solid phase or a semi-liquid phase state with the heat-treated raw coke powder by applying a compressive shear stress is preferable from the viewpoint that the device and the production method are relatively simple and the method is industrially suitable for mass production. A mixer, a stirrer, a crusher, or the like can be used without particular limitation as a device that applies the compressive shear stress. Specific examples thereof include a MECHANO FUSION (registered trademark) system (manufactured by Hosokawa Micron Corporation), NOBILTA (registered trademark) (manufactured by Hosokawa Micron Corporation), and NANOCULA (registered trademark) (manufactured by Hosokawa Micron Corporation).

For example, in a case where NOBILTA (registered trademark) (manufactured by Hosokawa Micron Corporation), it is preferable that the device is operated by setting the rotation speed of the blade to 1500 to 5000 rpm for 10 to 180 minutes.

Further, the step D may be carried out by performing heating in an atmosphere of inert gas such as helium, nitrogen, or argon at a temperature of preferably 400°C to 700°C and more preferably 500°C to 600°C.

<In regard to step E>

The step E is a step of graphitizing the above-described coated heat-treated raw coke powder to obtain an synthetic graphite material for lithium-ion secondary battery negative electrodes.

Specifically, the coated heat-treated raw coke powder is further subjected to the heat treatment to remove volatile components from the coated heat-treated raw coke powder, dewatered, thermally cracked, and subjected to a solid phase graphitization reaction. An synthetic graphite material for lithium-ion secondary battery negative electrodes with a stable quality is obtained by performing this graphitization treatment.

As the graphitization treatment method, a heat treatment of performing calcination for removing volatile components from the coated heat-treated raw coke powder to obtain calcinated coke, performing a carbonization treatment for carbonizing the heat-treated raw coke powder, and performing a graphitization treatment is an exemplary example.

The calcination and the carbonization treatment can be performed as necessary and may not be performed.

Even in a case where the calcination and the carbonization treatment are not provided in the graphitization treatment method, there is almost no influence on the physical properties of the synthetic graphite material to be finally produced.

As the calcination, a method of performing a heat treatment at a highest reach temperature of preferably 500°C to 1500°C and more preferably 900°C to 1200°C for a highest reach temperature holding time of 0 to 10 hours in an atmosphere of inert gas such as nitrogen, argon, or helium is an exemplary example.

As the carbonization treatment, a method of performing a heat treatment at a highest reach temperature of preferably 500°C to 1500°C and more preferably 900°C to 1500°C for a highest reach temperature holding time of 0 to 10 hours in an atmosphere of inert gas such as nitrogen, argon, or helium is an exemplary example.

As the graphitization treatment, a method of performing a heat treatment at a highest reach temperature of preferably 2500°C to 3200°C and more preferably 2800°C to 3200°C for a highest reach temperature holding time of 0 to 100 hours in an atmosphere of inert gas such as nitrogen, argon, or helium is an exemplary example.

The graphitization treatment may be performed, for example, by enclosing the heat-treated raw coke powder in a crucible made of graphite using a graphitization furnace such as an Acheson furnace or an LWG furnace.

The method for producing an synthetic graphite material for lithium-ion secondary battery negative electrodes according to the present embodiment has the above-described steps A to E.

In the method for producing an synthetic graphite material for lithium-ion secondary battery negative electrodes according to the present embodiment, the specific surface area of the heat-treated raw coke powder is controlled to 10.5 $m^2/g$ or greater. Further, it is preferable that the specific surface area thereof is controlled such that the volatile content of the heat-treated raw coke powder obtained in the step C is less than 3.71% and the true density of the heat-treated raw coke powder is greater than 1.22 $g/cm^3$ and less than 1.73 $g/cm^3$.

In this manner, the contact area between the heat-treated raw coke powder and the coating material increases, and a strong bond is formed in the step D. Therefore, in the graphite material to be finally obtained, lithium ions can be diffused in the graphite material at a high speed.

As a result, the electrodeposition of lithium metal is difficult to occur even in a case where a quick intercalation reaction of lithium ions occurs (even in a case of quick charging), and degradation of the discharge capacity is suitably suppressed even in a case where the quick charging is repeated.

Further, in the lithium-ion secondary battery having a negative electrode that contains an synthetic graphite material for lithium-ion secondary battery negative electrodes to be finally obtained, the coating material is unlikely to fall off even in a case where the quick charging is repeated, and the discharge capacity is unlikely to be degraded due to the formation of a strong bond between the heat-treated raw coke powder and the coating material.

Therefore, even in a case where the lithium-ion secondary battery having a negative electrode that contains the synthetic graphite material obtained by the method for producing the synthetic graphite material for lithium-ion secondary battery negative electrodes according to the present embodiment is repeatedly quickly charged, the discharge capacity is difficult to degrade.

(Synthetic graphite material for lithium-ion secondary battery negative electrodes)

The synthetic graphite material for lithium-ion secondary battery negative electrodes according to the present embodiment is an synthetic graphite material for lithium-ion secondary battery negative electrodes obtained by the above-described method for producing an synthetic graphite material for lithium-ion secondary battery negative electrodes.

The synthetic graphite material for lithium-ion secondary battery negative electrodes according to the present embodiment is produced by controlling the heat-treated raw coke powder and the coating material to be strongly bonded to each other. Therefore, even in the synthetic graphite material for lithium-ion secondary battery negative electrodes according to the present embodiment to be finally obtained, lithium ions can be diffused inside the particles of the synthetic graphite material at a high speed, and thus the synthetic graphite material is useful as the material for lithium-ion secondary battery negative electrodes.

(Negative electrode for lithium-ion secondary batteries)

The negative electrode for lithium-ion secondary batteries according to the present embodiment contains the synthetic graphite material for lithium-ion secondary battery negative electrodes according to the embodiment described above.

Specifically, the negative electrode contains the synthetic graphite material for lithium-ion secondary battery negative electrodes, a binder (binding agent), and a conductive assistant to be contained as necessary.

<Graphite material>

The negative electrode for lithium-ion secondary batteries according to the present embodiment may contain one or two or more kinds of known graphite materials or amorphous carbon materials as the graphite material as necessary, in addition to the synthetic graphite material for lithium-ion secondary battery negative electrodes according to the embodiment described above.

Examples of the known graphite materials include synthetic graphite materials (hereinafter, referred to as "other synthetic graphite materials") other than the synthetic graphite material for lithium-ion secondary battery negative electrodes according to the embodiment described above and natural graphite-based materials. Further, examples of the amorphous carbon material include known easily graphitizable carbon materials and hardly graphitizable carbon materials.

Examples of the natural graphite-based materials include naturally produced graphite-like materials, materials obtained by highly purifying the graphite-like materials, highly purified and then spherically formed (including a mechanochemical treatment) materials, and materials obtained by coating surfaces of high-purity products and spherical products with other carbons (for example, pitch-coated products and CVD-coated products), and materials which have been subjected to a plasma treatment.

The shapes of the other synthetic graphite materials, the natural graphite-based materials, and the amorphous carbon materials are not particularly limited, and may be, for example, scaly, spherical, or lumpy.

In a case where the negative electrode contains other synthetic graphite materials as the carbon material, the mixing ratio between the synthetic graphite material for lithium-ion secondary battery negative electrodes according to the embodiment described above and the other synthetic graphite materials can be set to an optional ratio.

For example, in 100% by mass of the mixture of the synthetic graphite material for lithium-ion secondary battery negative electrodes according to the embodiment described above and other synthetic graphite materials, the amount of the synthetic graphite material for lithium-ion secondary battery negative electrodes according to the embodiment described above is preferably 20% by mass or greater, more preferably 30% by mass or greater, and still more preferably 50% by mass or greater.

<Binder>

A known binder used for a negative electrode for lithium-ion secondary batteries can be used as the binder.

For example, carboxymethyl cellulose (CMC), polyvinylidene fluoride, polytetrafluoroethylene, styrene-butadiene rubber (SBR), and the like can be used alone or in the form of a mixture of two or more kinds thereof.

The amount of the binder in the negative electrode for lithium-ion secondary batteries according to the present embodiment may be appropriately set as necessary in consideration of the design of the lithium-ion secondary battery, and the content thereof is preferably in a range of 1 to 30 parts by mass with respect to 100 parts by mass of the graphite material described above.

<Conductive assistant>

A known conductive assistant used for a negative electrode for lithium-ion secondary batteries can be used as the conductive assistant.

For example, carbon black, graphite, acetylene black, an indium-tin oxide exhibiting conductivity, and conductive polymers such as polyaniline, polythiophene, and polyphenylene vinylene can be used alone or in the form of a mixture of two or more kinds thereof.

The amount of the conductive assistant in the negative electrode for lithium-ion secondary batteries according to the present embodiment may be appropriately set as necessary in consideration of the design of the lithium-ion secondary battery, and the content thereof is preferably in a range of 1 to 15 parts by mass with respect to 100 parts by mass of the graphite material described above.

As a method for producing the negative electrode for lithium-ion secondary batteries according to the present embodiment, for example, the negative electrode can be produced by producing a negative electrode mixture which is a mixture containing a graphite material containing the synthetic graphite material for lithium-ion secondary battery negative electrodes according to the embodiment described above, a binder, a conductive assistant contained as necessary, and a solvent and press-molding the negative electrode mixture into predetermined dimensions.

<Solvent>

As the solvent used in the negative electrode mixture, a known solvent used for the negative electrode for lithium-ion secondary batteries can be used.

For example, an organic solvent such as dimethylformamide, N-methylpyrrolidone, isopropanol, or toluene, and water can be used alone or in the form of a mixture of two or more kinds thereof.

As a method of mixing a graphite material, a binder, a conductive assistant contained as necessary, and a solvent, for example, a known device such as a screw type kneader, a ribbon mixer, a universal mixer, or a planetary mixer can be used.

As a method of press-molding the negative electrode mixture into predetermined dimensions, for example, a method such as roll pressurization or press pressurization can be used.

It is preferable that the press-molding of the negative electrode mixture is performed at a pressure of approximately 100 to 300 MPa.

The negative electrode for lithium-ion secondary batteries of the present embodiment may be produced by, for example, a method described below. That is, the graphite material containing the synthetic graphite material for lithium-ion secondary battery negative electrodes according to the embodiment described above, the binder, the conductive assistant contained as necessary, and the solvent are kneaded by a known method to produce a slurry-like or paste-like negative electrode mixture. Thereafter, a layer formed of a dried negative electrode mixture is formed by coating a negative electrode current collector such as copper foil with the slurry-like or paste-like negative electrode mixture, drying the negative electrode current collector, and molding the negative electrode current collector into a shape such as a sheet shape or a pellet shape. Thereafter, the layer formed of the dried negative electrode mixture is rolled and cut to predetermined dimensions, thereby producing a negative electrode for lithium-ion secondary batteries.

A method of coating the negative electrode current collector with the slurry-like or paste-like negative electrode mixture is not particularly limited.

Examples of the method include known methods such as a metal mask printing method, an electrostatic coating method, a dip coating method, a spray coating method, a roll coating method, a doctor blade method, a gravure coating method, a screen printing method, and a die coater method.

As a method of rolling the layer formed of the dried negative electrode mixture, for example, the layer can be rolled by using a flat plate press, a calendering roll, or the like. The layer formed of the dried negative electrode mixture formed on the negative electrode current collector can be integrated with the negative electrode current collector by a known method such as a method using a roll, a press, or a combination thereof.

The material of the negative electrode current collector can be used without particular limitation as long as the material does not form an alloy with lithium. Specific examples of the material of the negative electrode current collector include copper, nickel, titanium, and stainless steel.

The shape of the negative electrode current collector can also be used without particular limitation. Specific examples of the shape of the negative electrode current collector include a foil shape, a perforated foil shape, a mesh shape, and a strip shape as the overall shape thereof.

Further, as the negative electrode current collector, for example, a porous material such as a porous metal (foam metal) or carbon paper may be used.

Since the negative electrode for lithium-ion secondary batteries according to the present embodiment described above contains the synthetic graphite material for lithium-ion secondary battery negative electrodes according to the embodiment described above, the discharge capacity is difficult to degrade even in a case where the charge and discharge cycle is repeated with a large current.

(Lithium-ion secondary battery)

The lithium-ion secondary battery according to the present embodiment is a lithium-ion secondary battery having the negative electrode for lithium-ion secondary batteries according to the embodiment described above.

An embodiment of the lithium-ion secondary battery according to the present embodiment will be described with reference to FIG. 1.

FIG. 1 is a schematic cross-sectional view showing an example of the lithium-ion secondary battery of the present embodiment.

A lithium-ion secondary battery 10 shown in FIG. 1 includes a negative electrode 11 integrated with a negative electrode current collector 12 and a positive electrode 13 integrated with a positive electrode current collector 14.

In the lithium-ion secondary battery 10, the negative electrode for lithium-ion secondary batteries according to the present embodiment described above is used as the negative electrode 11.

The negative electrode 11 and a positive electrode 13 are disposed to face each other via a separator 15.

The negative electrode 11 integrated with the negative electrode current collector 12 and the positive electrode 13 integrated with the positive electrode current collector 14 are covered with an aluminum laminate exterior 16.

An electrolyte solution is injected into the aluminum laminate exterior 16.

The positive electrode 13 contains an active material, a binder, and a conductive assistant contained as necessary.

As the active material, a known material used for a positive electrode for lithium-ion secondary batteries can be used, and a metal compound, a metal oxide, a metal sulfide, or a conductive polymer material which is capable of doping or intercalating lithium ions can be used. Specific examples of the active material include lithium cobaltate ($LiCoO_2$), lithium nickelate ($LiNiO_2$), lithium manganate ($LiMn_2O_4$), a complex oxide ($LiCo_XNi_YMn_ZO_2$, X + Y + Z = 1), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine type $LiMPO_4$ (M: Co, Ni, Mn, Fe), a conductive polymer such as polyacetylene, polyaniline, polypyrrole, polythiophene, or polyacene, porous carbon, and mixtures thereof.

As the binder, the same binder as that used for the negative electrode 11 described above can be used.

As the conductive assistant, the same conductive assistant as that used for the negative electrode 11 described above can be used.

As the positive electrode current collector 14, for example, a valve metal or an alloy thereof that forms a passive film on the surface by anodization in an electrolyte solution is preferably used. Specifically, Al, Ti, Zr, Hf, Nb, Ta, and alloys containing these metals can be used. Particularly, from the viewpoints of the light weight and the high energy density, Al and an alloy thereof are preferable.

As the separator 15, for example, non-woven fabric, a cloth, a microporous film, which contains polyolefin such as polyethylene or polypropylene as a main component, or a combination thereof can be used. Further, in a case where the lithium-ion secondary battery has a structure in which the positive electrode and the negative electrode do not come into direct contact with each other, the separator is unnecessary.

As the electrolyte solution and an electrolyte used in the lithium-ion secondary battery 10, a known organic electrolyte solution, an inorganic solid electrolyte, and a polymer solid electrolyte which are used in a lithium-ion secondary battery can be used. As the electrolyte solution, it is preferable to use an organic electrolyte solution from the viewpoint of the electrical conductivity.

Examples of the organic electrolyte solution include an ether such as dibutyl ether, ethylene glycol monomethyl ether, ethylene glycol monoethyl ether, ethylene glycol monobutyl ether, diethylene glycol monomethyl ether, or ethylene glycol phenyl ether, an amide such as N-methylformamide, N,N-dimethylformamide, N-ethylformamide, N,N-diethylformamide, N-methylacetamide, N,N-dimethylacetamide, N-ethylacetamide, or N,N-diethylacetamide, a sulfur-containing compound such as dimethyl sulfoxide or sulfolane, dialkyl ketone such as methyl ethyl ketone or methyl isobutyl ketone, a cyclic ether such as tetrahydrofuran or 2-methoxy tetrahydrofuran, a cyclic carbonate such as ethylene carbonate, butylene carbonate, propylene carbonate, or vinylene carbonate, a chain-like carbonate such as diethyl carbonate, dimethyl carbonate, methyl ethyl carbonate, or methyl propyl carbonate, cyclic carbonic acid ester such as $\gamma$-butyrolactone of $\gamma$-valerolactone, chain-like carbonic acid ester such as methyl acetate, ethyl acetate, methyl propionate, or ethyl propionate, and an organic solvent such as N-methyl-2-pyrrolidinone, acetonitrile, or nitromethane. These organic electrolyte solutions can be used alone or in the form of a mixture of two or more kinds thereof.

As the electrolyte, various known lithium salts can be used. Examples of the lithium salts include $LiClO_4$, $LiBF_4$, $LiPF_6$, $LiAlCl_4$, $LiSbF_6$, $LiSCN$, $LiCl$, $LiCF_3SO_3$, $LiCF_3CO_2$, $LiN(CF_3SO_2)_2$, and $LiN(C_2F_5SO_2)_2$.

Examples of the polymer solid electrolyte include a polyethylene oxide derivative and a polymer containing the derivative, a polypropylene oxide derivative and a polymer containing the derivative, a phosphoric acid ester polymer, and a polycarbonate derivative and a polymer containing the derivative.

Since the lithium-ion secondary battery 10 according to the present embodiment includes the negative electrode 11 containing the synthetic graphite material for lithium-ion secondary battery negative electrodes according to the present embodiment described above, the discharge capacity is difficult to degrade even in a case where the charge and discharge cycle is repeated with a large current. Therefore, the lithium-ion secondary battery 10 of the present embodiment can be preferably used for industrial purposes such as applications for automobiles such as hybrid automobiles, plug-in hybrid automobiles, and electric vehicles and power storage of system infrastructures.

The lithium-ion secondary battery according to the present embodiment is not limited as long as the battery has the negative electrode for lithium-ion secondary batteries according to the embodiment described above, and is not restricted in selecting members necessary for the configuration of the battery other than the negative electrode.

Specifically, the structure of the lithium-ion secondary battery of the present invention is not limited to the lithium-ion secondary battery 10 shown in FIG. 1.

The method for producing the lithium-ion secondary battery according to the present embodiment is not particularly limited as long as the negative electrode for lithium-ion secondary batteries according to the embodiment described above is used, and a known production method can be used.

For example, the method includes a step of disposing the negative electrode for lithium-ion secondary batteries according to the embodiment described above and the positive electrode to face each other via a separator. More specifically, it is preferable that the method includes a step of integrating the negative electrode for lithium-ion secondary batteries according to the embodiment described above and the negative electrode current collector, integrating the positive electrode and the positive electrode current collector, and disposing the negative electrode integrated with the negative electrode current collector and the positive electrode integrated with the positive electrode current collector to face each other via a separator.

Next, the lithium-ion secondary battery of the present embodiment can be obtained by accommodating a single-layer electrode body in which the negative electrode integrated with the negative electrode current collector and the positive electrode integrated with the positive electrode current collector are disposed to face each other via a separator in an exterior body and injecting an electrolyte solution to the inside of the exterior body.

The lithium-ion secondary battery may have, for example, a structure obtained by inserting a wound electrode group in which a positive electrode and a negative electrode, which are molded into a strip shape, are spirally wound through a separator, into a battery case and sealing the case. Further, the lithium-ion secondary battery may be a structure obtained by enclosing a laminated electrode plate group in which a positive electrode and a negative electrode, which are molded into a flat plate shape, are sequentially laminated through a separator, in an exterior body.

The lithium-ion secondary battery of the present embodiment can be used as, for example, a paper type battery, a button type battery, a coin type battery, a laminated battery, a cylindrical battery, or a square battery.

[Examples]

Hereinafter, the present invention will be described in more detail based on the examples, but the present invention is not limited to the following examples.

In the present example, a raw material oil composition used in the production of an synthetic graphite material for lithium-ion secondary battery negative electrodes of Example 1 will be described as "raw material oil composition of Example 1", and other raw materials and materials produced will also be described in the same manner as described above.

<Production of synthetic graphite material for lithium-ion secondary battery negative electrodes>

(Example 1)

<<Production of raw material oil coniposition>>

Further, the atmospheric distillation residual oil which had been subjected to vacuum distillation and further hydrodesulfurized (sulfur content of 380 mass ppm, density of 0.83 g/cm$^3$ at 15°C) was subjected to fluid catalytic cracking under the conditions of a reaction temperature of 530°C, a total pressure of 0.23 MPa, and a catalyst/oil ratio of 13, and a contact time of 7 seconds, thereby obtaining a fluid catalytic cracking residual oil. As the catalyst, a silica-alumina catalyst which was allowed to carry platinum was used. Further, "sulfur content" denotes a value measured in conformity with JIS K 2541.

Further, the same volume of n-heptane was added to and mixed with the fluid catalytic cracking residual oil obtained above, and selective extraction was carried out with dimethylformamide so that the aromatic content and the saturated content were separated from the oil.

Further, the atmospheric distillation residual oil (sulfur content of 0.35% by mass, density of 0.92 g/cm$^3$ at 15°C) was subjected to vacuum distillation under the conditions of a heating furnace outlet temperature of 350°C and a pressure of 1.3 kPa, thereby obtaining vacuum distillation residual oil having an initial boiling point of 410°C, an asphalt content of 9% by mass, a saturated content of 61% by mass, a sulfur content of 0.1% by mass, and a nitrogen content of 0.3% by mass. The same volume of n-heptane as described above was added to and mixed with the vacuum distillation residual oil, and selective extraction was carried out with dimethylformamide so that the aromatic content and the saturated content were separated from the oil.

Further, "nitrogen content" denotes a value measured in conformity with JIS K 2609. Further, "saturated content" and "asphalt content" denote values measured using a thin layer chromatograph.

The fluid catalytic cracking residual oil, the saturated content of the fluid catalytic cracking residual oil, and the saturated content of the vacuum distillation residual oil which were obtained in the above-described manners were mixed at a mass ratio of 43:50:7, thereby obtaining a raw material oil composition of Example 1. The normal paraffin content and the aromatic index fa of the obtained raw material oil composition of Example 1 were determined by the methods described below. The results thereof are listed in Table 1.

[Normal paraffin content]

The normal paraffin content in the raw material oil composition was measured by a gas chromatograph equipped with a capillary column. Specifically, the measurement was performed by passing a sample of a non-aromatic component separated by an elution chromatography method through the capillary column after verification with a standard substance of normal paraffin. The normal paraffin content (% by mass) with respect to the total mass of the raw material oil composition was calculated from the measured value.

[Aromatic index fa]

The aromatic index fa of the raw material oil composition was determined by the Knight method. Specifically, the carbon distribution was divided into three components (A1, A2, and A3) as a spectrum of aromatic carbon by the $^{13}$C-NMR method. Here, A1 represents the number of carbon atoms inside the aromatic ring (half of the substituted aromatic carbon atoms and the non-substituted aromatic carbon atoms (corresponding to the peak in a range of approximately 40 to 60 ppm of $^{13}$C-NMR)), A2 represents the number of the other half of the non-substituted remaining aromatic carbon atoms (corresponding to the peak in a range of approximately 60 to 80 ppm of $^{13}$C-NMR), and A3 represents the number of aliphatic carbon atoms (corresponding to the peak in a range of approximately 130 to 190 ppm of $^{13}$C-NMR). The aromatic index fa was determined by an expression of "fa = (A1 + A2)/(A1 + A2 + A3)" using A1, A2, and A3.

«Step A»

Next, the raw material oil composition of Example 1 was put into a test tube and was subjected to a heat treatment at 500°C for 3 hours under normal pressure as a coking treatment for coking, thereby obtaining a raw coke composition of Example 1.

«Step B»

The obtained raw coke composition of Example 1 was heated at 550°C in a mixed gas stream in which the volume ratio between nitrogen and oxygen was 83:17, thereby obtaining a heat-treated raw coke composition of Example 1. A treatment of setting the heating time from room temperature (25°C) to 550°C to 1 hour, the retention time at 550°C to 1 hour, and the cooling time from 550°C to 400°C to 1 hour and allowing the composition to be naturally cooled for 4 hours while maintaining the mixed gas stream after the temperature reached 400°C was performed as the heat treatment method.

«Step C»

The obtained heat-treated raw coke composition of Example 1 was crushed by an air flow jet mill such that the average particle diameter determined by a method described below was in a range of 7.5 to 8.5 $\mu$m, thereby obtaining heat-treated raw coke powder of Example 1. Further, the specific surface area, the volatile content, and the true density of the heat-treated raw coke powder were determined by the following methods. The results are listed in Table 1.

[Measurement of specific surface area]

The specific surface area was measured and calculated in conformity with "Determination of the Specific Surface Area of Powders (Solids) by Gas Adsorption-BET Method" of JIS Z 8830 (2013) using a specific surface area measuring device (BELSORP miniII) (manufactured by Microtrac Bell Co., Ltd.). Further, the synthetic graphite material was pre-dried at 300°C for 3 hours under reduced pressure. Thereafter, the specific surface area was calculated by the nitrogen adsorption BET multipoint method according to the gas flow method.

[Measurement of average particle diameter]

The average particle diameter was measured using a laser diffraction scattering type particle size distribution measuring device (MT3300EXII) (manufactured by Microtrac Bell Co., Ltd). The dispersion liquid used for the measurement was prepared by mixing a 0.1 wt% sodium hexametaphosphate aqueous solution (several drops) and a surfactant (several drops) with approximately 0.5 g of the graphite powder, sufficiently stirring the solution using a mortar to be homogeneous, further adding 40 mL of a 0.1 wt% sodium hexametaphosphate aqueous solution thereto, and dispersing the solution using an ultrasonic homogenizer.
The obtained measurement result of the particle size distribution was calculated in conformity with "Weighted volume-based average diameter" of "4.2.3 Weighted average particle diameter" in "Representation of results of particle size analysis - Part 2: calculation of average particle sizes and moments from particle size distribution" of JIS Z 8819-2 (2001).

[Measurement of volatile content]

The volatile content [mass fraction (%)] of the heat-treated raw coke powder was determined in conformity with "b) In case of cokes" of "7.2 Vertical tubular electric furnace method" of "7. Volatile content quantification method" described in "Coal and coke-methods for proximate analysis" of JIS M 8812 (2004).

[Measurement of true density]

The true density [g/cm$^3$] of the heat-treated raw coke powder was determined in conformity with "7.3 True density test method" of "7. Density/pore ratio test method" described in "Coke-test method" of JIS K 2151 (2004).

<<Step D>>

· Production of coating material

Heavy oil serving as bottom oil of a residual oil fluid catalytic cracking device (RFCC) was put into a stainless steel container, heated and dissolved at approximately 250°C, heated to 400°C at a temperature increasing rate of 3°C/min, and maintained for 50 minutes, thereby obtaining a heat-treated product. This heat-treated product was stirred in a nitrogen gas atmosphere at 270°C for 30 minutes to remove aggregates formed of 6% by weight of a bulk mesophase, thereby obtaining a homogeneous optically isotropic pitch from which the bulk mesophase had been removed. Next, the obtained optically isotropic pitch was heat-treated while being stirred under reduced pressure of 5 mmHg or less at 400°C for 3 hours, thereby obtaining petroleum-based anisotropic pitch. The obtained petroleum-based anisotropic pitch was crushed with an air flow type jet mill such that the average particle diameter thereof was approximately 5 $\mu$m, thereby producing a coating material formed of the petroleum-based anisotropic pitch.

· Coating heat-treated raw coke powder with coating material

The obtained coating material and the heat-treated raw coke powder of Example 1 were mixed at a weight ratio of 5:95, put into a compressive shear application device "NOBILTA 130 TYPE" (manufactured by Hosokawa Micron Corporation) such that the filling rate in terms of bulk density reached 50%, and the device was operated for 60 minutes by setting the rotation speed of the blade to 3500 rpm and the space between the blade and the housing to 3 mm, thereby obtaining coated heat-treated raw coke powder of Example 1.

«Step E»

The coated heat-treated raw coke powder of Example 1 was put into a crucible formed of graphite, the crucible was embedded in packing coke serving as a heating material and a heat insulating material in an Acheson furnace, and the powder was graphitized at 2950°C.

The graphitization treatment was performed by setting the heating time from room temperature (25°C) to 2950°C to 130 hours, the retention time at 2950°C to 8 hours, naturally cooling the heat-treated raw coke powder for 25 days, and taking out the heat-treated raw coke powder, thereby obtaining an synthetic graphite material for lithium-ion secondary battery negative electrodes of Example 1.

(Example 2)

<<Production of raw material oil composition>>

Atmospheric distillation residual oil having a sulfur content of 3.1% by mass was hydrodesulfurized in the presence of a catalyst such that the hydrocracking rate reached 25% or less, thereby obtaining hydrodesulfurized oil. The hydrodesulfurization was performed under the condition of a total pressure of 18 MPa, a hydrogen partial pressure of 16 MPa, and a temperature of 380°C.

The hydrodesulfurized oil obtained above and the fluid catalytic cracking residual oil obtained in Example 1 were mixed at a mass ratio of 5:95, thereby obtaining a raw material oil composition of Example 2.

The normal paraffin content and the aromatic index fa of the raw material oil composition of Example 2 were determined by the same methods as in Example 1. The results thereof are listed in Table 1.

«Step A»

The raw material oil composition of Example 2 was subjected to a coking treatment for coking by the same method as in Example 1, thereby obtaining a raw coke composition of Example 2.

«Step B»

The raw coke composition of Example 2 was heated at 700°C in a mixed gas stream in which the volume ratio between nitrogen and oxygen was 98:2, thereby obtaining a heat-treated raw coke composition of Example 2.

A treatment of setting the heating time from room temperature (25°C) to 700°C to 2 hours, the retention time at 700°C to 1 hour, and the cooling time from 700°C to 400°C to 2 hours and allowing the composition to be naturally cooled for 4 hours while maintaining the mixed gas stream after the temperature reached 400°C was performed as the heat treatment method.

«Step C»

The heat-treated raw coke composition of Example 2 was crushed by an air flow type jet mill such that the average particle diameter measured by the method described in [Measurement of average particle diameter] of Example 1 was in a range of 7.5 to 8.5 $\mu$m, thereby obtaining heat-treated raw coke powder of Example 2.

The specific surface area, the volatile content, and the true density of the heat-treated raw coke powder of Example 2 were obtained by the same methods as in Example 1. The results thereof are listed in Table 1.

«Step D and step E»

An synthetic graphite material for lithium-ion secondary battery negative electrodes of Example 2 was obtained by coating the heat-treated raw coke powder of Example 2 with the same coating material using the same method as in Example 1 and graphitizing the heat-treated raw coke powder using the same method as in Example 1.

(Example 3)

<<Production of raw material oil composition>>

The saturated content of the fluid catalytic cracking residual oil and the aromatic content of the fluid catalytic cracking residual oil obtained in Example 1 were mixed at a mass ratio of 70:30, thereby obtaining a raw material oil composition of Example 3.
The normal paraffin content and the aromatic index fa of the raw material oil composition of Example 3 were determined by the same methods as in Example 1. The results thereof are listed in Table 1.

«Step A»

The raw material oil composition of Example 3 was subjected to a coking treatment for coking by the same method as in Example 1, thereby obtaining a raw coke composition of Example 3.

«Step B»

The raw coke composition of Example 3 was heated at 600°C in a mixed gas stream in which the volume ratio between nitrogen and oxygen was 90:10, thereby obtaining a heat-treated raw coke composition of Example 3.
A treatment of setting the heating time from room temperature (25°C) to 600°C to 1 hour and 30 minutes, the retention time at 600°C to 1 hour, and the cooling time from 600°C to 400°C to 1 hour and 30 minutes and allowing the composition to be naturally cooled for 4 hours while maintaining the mixed gas stream after the temperature reached 400°C was performed as the heat treatment method.

«Step C»

The heat-treated raw coke composition of Example 3 was crushed by an air flow type jet mill such that the average particle diameter measured by the method described in (Measurement of average particle diameter) of Example 1 was in a range of 7.5 to 8.5 μm, thereby obtaining heat-treated raw coke powder of Example 3.
Further, the specific surface area, the volatile content, and the true density of the heat-treated raw coke powder of Example 3 were determined by the same methods as in Example 1. The results thereof are listed in Table 1.

«Step D and step E»

An synthetic graphite material for lithium-ion secondary battery negative electrodes of Example 3 was obtained by coating the heat-treated raw coke powder of Example 3 with the same coating material using the same method as in Example 1 and graphitizing the heat-treated raw coke powder using the same method as in Example 1.

(Example 4)

<<Production of raw material oil composition>>

The saturated content of the vacuum distillation residual oil obtained in Example 1 and the aromatic content of the fluid catalytic cracking residual oil similarly obtained in Example 1 were mixed at a mass ratio of 30:70, thereby obtaining a raw material oil composition of Example 4.
The normal paraffin content and the aromatic index fa of the raw material oil composition of Example 4 were determined by the same methods as in Example 1. The results thereof are listed in Table 1.

«Step A»

The raw material oil composition of Example 4 was subjected to a coking treatment for coking by the same method as in Example 1, thereby obtaining a raw coke composition of Example 4.

«Step B»

The raw coke composition of Example 4 was heated at 500°C in a mixed gas stream in which the volume ratio between nitrogen and oxygen was 83:17, thereby obtaining a heat-treated raw coke composition of Example 4.

A treatment of setting the heating time from room temperature (25°C) to 500°C to 1 hour, the retention time at 500°C to 1 hour, and the cooling time from 500°C to 400°C to 1 hour and allowing the composition to be naturally cooled for 4 hours while maintaining the mixed gas stream after the temperature reached 400°C was performed as the heat treatment method.

«Step C»

The heat-treated raw coke composition of Example 4 was crushed by an air flow type jet mill such that the average particle diameter measured by the method described in (Measurement of average particle diameter) of Example 1 was in a range of 7.5 to 8.5 $\mu$m, thereby obtaining heat-treated raw coke powder of Example 4.

Further, the specific surface area, the volatile content, and the true density of the heat-treated raw coke powder of Example 4 were determined by the same methods as in Example 1. The results thereof are listed in Table 1.

«Step D and step E»

An synthetic graphite material for lithium-ion secondary battery negative electrodes of Example 4 was obtained by coating the heat-treated raw coke powder of Example 4 with the same coating material using the same method as in Example 1 and graphitizing the heat-treated raw coke powder using the same method as in Example 1.

(Example 5)

<<Production of raw material oil composition>>

The saturated content of the fluid catalytic cracking residual oil obtained in Example 1, the aromatic content of the fluid catalytic cracking residual oil similarly obtained in Example 1, and the hydrodesulfurized oil obtained in Example 2 were mixed at a mass ratio of 20:20:60, thereby obtaining a raw material oil composition of Example 5.

The normal paraffin content and the aromatic index fa of the raw material oil composition of Example 5 were determined by the same methods as in Example 1. The results thereof are listed in Table 1.

«Step A»

The raw material oil composition of Example 5 was subjected to a coking treatment for coking by the same method as in Example 1, thereby obtaining a raw coke composition of Example 5.

«Step B»

The raw coke composition of Example 5 was heated at 500°C in a mixed gas stream in which the volume ratio between nitrogen and oxygen was 83:17, thereby obtaining a heat-treated raw coke composition of Example 5.

A treatment of setting the heating time from room temperature (25°C) to 500°C to 1 hour, the retention time at 500°C to 1 hour, and the cooling time from 500°C to 400°C to 1 hour and allowing the composition to be naturally cooled for 4 hours while maintaining the mixed gas stream after the temperature reached 400°C was performed as the heat treatment method.

«Step C»

The heat-treated raw coke composition of Example 5 was crushed by an air flow type jet mill such that the average particle diameter measured by the method described in (Measurement of average particle diameter) of Example 1 was in a range of 7.5 to 8.5 $\mu$m, thereby obtaining heat-treated raw coke powder of Example 5.

Further, the specific surface area, the volatile content, and the true density of the heat-treated raw coke powder of Example 5 were determined by the same methods as in Example 1. The results thereof are listed in Table 1.

«Step D and step E»

An synthetic graphite material for lithium-ion secondary battery negative electrodes of Example 5 was obtained by coating the heat-treated raw coke powder of Example 5 with the same coating material using the same method as in Example 1 and graphitizing the heat-treated raw coke powder using the same method as in Example 1.

(Comparative Example 1)

<<Preparation of raw material oil composition>>

The same raw coke composition as in Example 1 was used as the raw coke composition of Comparative Example 1.

«Step A»

The raw coke composition of Comparative Example 1 was subjected to a coking treatment for coking by the same method as in Example 1, thereby obtaining a raw coke composition of Comparative Example 1.

<<Low-temperature heat treatment step>>

The raw coke composition of Comparative Example 1 was heated at 400°C in a mixed gas stream in which the volume ratio between nitrogen and oxygen was 83:17, thereby obtaining a heat-treated raw coke composition of Comparative Example 1.
A treatment of setting the heating time from room temperature (25°C) to 400°C to 1 hour and the retention time at 400°C to 1 hour and allowing the composition to be naturally cooled for 4 hours while maintaining the mixed gas stream was performed as the heat treatment method.

«Step C»

The heat-treated raw coke composition of Comparative Example 1 was crushed by an air flow type jet mill such that the average particle diameter measured by the method described in (Measurement of average particle diameter) of Example 1 was in a range of 7.5 to 8.5 $\mu$m, thereby obtaining heat-treated raw coke powder of Comparative Example 1.
Further, the specific surface area, the volatile content, and the true density of the heat-treated raw coke powder of Comparative Example 1 were determined by the same methods as in Example 1. The results thereof are listed in Table 1.

«Step D and step E»

An synthetic graphite material for lithium-ion secondary battery negative electrodes of Comparative Example 1 was obtained by coating the heat-treated raw coke powder of Comparative Example 1 with the same coating material using the same method as in Example 1 and graphitizing the heat-treated raw coke powder using the same method as in Example 1.

(Comparative Example 2)

<<Preparation of raw material oil composition>>

The same raw coke composition as in Example 1 was used as the raw coke composition of Comparative Example 2.

«Step A»

The raw coke composition of Comparative Example 2 was subjected to a coking treatment for coking by the same method as in Example 1, thereby obtaining a raw coke composition of Comparative Example 2.

<<High-temperature heat treatment step>>

A heat-treated raw coke composition of Comparative Example 2 was obtained by heating the raw coke composition of Comparative Example 2 at 750°C in a mixed gas stream of nitrogen and oxygen at a volume ratio of 99:1.
A treatment of setting the heating time from room temperature (25°C) to 750°C to 2 hours, the retention time at 750°C to 1 hour, and the cooling time from 750°C to 400°C to 2 hours and allowing the composition to be naturally cooled for 4 hours while maintaining the mixed gas stream after the temperature reached 400°C was performed as the heat treatment method. Thereafter, a treatment of allowing the composition to be naturally cooled for 4 hours while maintaining the mixed gas stream was performed.

«Step C»

The heat-treated raw coke composition of Comparative Example 2 was crushed by an air flow type jet mill such that the average particle diameter measured by the method described in (Measurement of average particle diameter) of Example 1 was in a range of 7.5 to 8.5 $\mu$m, thereby obtaining heat-treated raw coke powder of Comparative Example 2.
Further, the specific surface area, the volatile content, and the true density of the heat-treated raw coke powder of Comparative Example 2 were determined by the same methods as in Example 1. The results thereof are listed in Table 1.

«Step D and step E»

An synthetic graphite material for lithium-ion secondary battery negative electrodes of Comparative Example 2 was obtained by coating the heat-treated raw coke powder of Comparative Example 2 with the same coating material using the same method as in Example 1 and graphitizing the heat-treated raw coke powder using the same method as in Example 1.

(Comparative Example 3)

<<Production of raw material oil composition>>

The same raw coke composition as in Example 1 was used as the raw coke composition of Comparative Example 3.

«Step A»

The raw coke composition of Comparative Example 3 was subjected to a coking treatment for coking by the same method as in Example 1, thereby obtaining a raw coke composition of Comparative Example 3.

«Heat treatment step»

In the method for producing the synthetic graphite material for lithium-ion secondary battery negative electrodes of Comparative Example 3, the raw coke composition was not subjected to the heat treatment.

«Step C»

The raw coke composition of Comparative Example 3 was crushed by an air flow type jet mill such that the average particle diameter measured by the method described in (Measurement of average particle diameter) of Example 1 was in a range of 7.5 to 8.5 $\mu$m, thereby obtaining heat-treated raw coke powder of Comparative Example 3.
Further, the specific surface area, the volatile content, and the true density of the heat-treated raw coke powder of Comparative Example 3 were determined by the same methods as in Example 1. The results thereof are listed in Table 1.

«Step D and step E»

An synthetic graphite material for lithium-ion secondary battery negative electrodes of Comparative Example 3 was obtained by coating the heat-treated raw coke powder of Comparative Example 3 with the same coating material using the same method as in Example 1 and graphitizing the heat-treated raw coke powder using the same method as in Example 1.

(Comparative Example 4)

<<Production of raw material oil composition>>

The aromatic content of the fluid catalytic cracking residual oil obtained in Example 1, the saturated content of the fluid catalytic cracking residual oil obtained in Example 1, and the hydrodesulfurized oil obtained in Example 2 were mixed at a mass ratio of 15:20:65, thereby obtaining a raw material oil composition of Comparative Example 4.
The normal paraffin content and the aromatic index fa of the raw material oil composition of Comparative Example 4 were determined by the same methods as in Example 1. The results thereof are listed in Table 1.

«Step A»

The raw coke composition of Comparative Example 4 was subjected to a coking treatment for coking by the same method as in Example 1, thereby obtaining a raw coke composition of Comparative Example 4.

«Step B»

The raw coke composition of Comparative Example 4 was heated at 500°C in a mixed gas stream in which the volume ratio between nitrogen and oxygen was 83:17, thereby obtaining a heat-treated raw coke composition of Comparative Example 4.
A treatment of setting the heating time from room temperature (25°C) to 500°C to 1 hour, the retention time at 500°C to 1 hour, and the cooling time from 500°C to 400°C to 1 hour and allowing the composition to be naturally cooled for 4 hours while maintaining the mixed gas stream after the temperature reached 400°C was performed as the heat treatment method.

«Step C»

The heat-treated raw coke composition of Comparative Example 4 was crushed by an air flow type jet mill such that the average particle diameter measured by the method described in (Measurement of average particle diameter) of Example 1 was in a range of 7.5 to 8.5 $\mu$m, thereby obtaining heat-treated raw coke powder of Comparative Example 4.
Further, the specific surface area, the volatile content, and the true density of the heat-treated raw coke powder of Comparative Example 4 were determined by the same methods as in Example 1. The results thereof are listed in Table 1.

«Step D and step E»

An synthetic graphite material for lithium-ion secondary battery negative electrodes of Comparative Example 4 was obtained by coating the heat-treated raw coke powder of Comparative Example 4 with the same coating material using the same method as in Example 1 and graphitizing the heat-treated raw coke powder using the same method as in Example 1.

(Comparative Example 5)

<<Production of raw material oil composition>>

The aromatic content of the fluid catalytic cracking residual oil obtained in Example 1 and the saturated content of the fluid catalytic cracking residual oil similarly obtained in Example 1 were mixed at a mass ratio of 50:50, thereby obtaining a raw material oil composition of Comparative Example 5.
The normal paraffin content and the aromatic index fa of the raw material oil composition of Comparative Example 5 were determined by the same methods as in Example 1. The results thereof are listed in Table 1.

«Step A»

The raw material oil composition of Comparative Example 5 was subjected to a coking treatment for coking by the same method as in Example 1, thereby obtaining a raw coke composition of Comparative Example 5.

«Step B»

The raw coke composition of Comparative Example 5 was heated at 700°C in a mixed gas stream in which the volume ratio between nitrogen and oxygen was 98:2, thereby obtaining a heat-treated raw coke composition of Comparative Example 5.
A treatment of setting the heating time from room temperature (25°C) to 700°C to 2 hours, the retention time at 700°C to 1 hour, and the cooling time from 700°C to 400°C to 2 hours and allowing the composition to be naturally cooled for 4 hours while maintaining the mixed gas stream after the temperature reached 400°C was performed as the heat treatment method.

«Step C»

The heat-treated raw coke composition of Comparative Example 5 was crushed by an air flow type jet mill such that the average particle diameter measured by the method described in (Measurement of average particle diameter) of Example 1 was in a range of 7.5 to 8.5 μm, thereby obtaining heat-treated raw coke powder of Comparative Example 5.
Further, the specific surface area, the volatile content, and the true density of the heat-treated raw coke powder of Comparative Example 5 were determined by the same methods as in Example 1. The results thereof are listed in Table 1.

«Step D and step E»

An synthetic graphite material for lithium-ion secondary battery negative electrodes of Comparative Example 5 was obtained by coating the heat-treated raw coke powder of Comparative Example 5 with the same coating material using the same method as in Example 1 and graphitizing the heat-treated raw coke powder using the same method as in Example 1.

(Comparative Example 6)

<<Production of raw material oil composition>>

The saturated content of the vacuum distillation residual oil obtained in Example 1 and the aromatic content of the fluid catalytic cracking residual oil obtained in Example 1 were mixed at a mass ratio of 15:85, thereby obtaining a raw material oil composition of Comparative Example 6.
The normal paraffin content and the aromatic index fa of the raw material oil composition of Comparative Example 6 were determined by the same methods as in Example 1. The results thereof are listed in Table 1.

«Step A»

The raw material oil composition of Comparative Example 6 was subjected to a coking treatment for coking by the same method as in Example 1, thereby obtaining a raw coke composition of Comparative Example 6.

«Step B»

The raw coke composition of Comparative Example 6 was heated at 600°C in a mixed gas stream in which the volume ratio between nitrogen and oxygen was 90:10, thereby obtaining a heat-treated raw coke composition of Comparative Example 6.
A treatment of setting the heating time from room temperature (25°C) to 600°C to 1 hour and 30 minutes, the retention time at 600°C to 1 hour, and the cooling time from 600°C to 400°C to 1 hour and 30 minutes and allowing the composition to be naturally cooled for 4 hours while maintaining the mixed gas stream after the temperature reached 400°C was performed as the heat treatment method.

«Step C»

The heat-treated raw coke composition of Comparative Example 6 was crushed by an air flow type jet mill such that the average particle diameter measured by the method described in (Measurement of average particle diameter) of Example 1 was in a range of 7.5 to 8.5 μm, thereby obtaining heat-treated raw coke powder of Comparative Example 6.
Further, the specific surface area, the volatile content, and the true density of the heat-treated raw coke powder of Comparative Example 6 were determined by the same methods as in Example 1. The results thereof are listed in Table 1.

«Step D and step E»

An synthetic graphite material for lithium-ion secondary battery negative electrodes of Comparative Example 6 was obtained by coating the heat-treated raw coke powder of Comparative Example 6 with the same coating material using the same method as in Example 1 and graphitizing the heat-treated raw coke powder using the same method as in Example 1.

(Comparative Example 7)

<<Production of raw material oil composition>>

The saturated content of the vacuum distillation residual oil obtained in Example 1, the aromatic content of the fluid catalytic cracking residual oil obtained in Example 1, and the hydrodesulfurized oil obtained in Example 2 were mixed at a mass ratio of 4:91:5, thereby obtaining a raw material oil composition of Comparative Example 7. The normal paraffin content and the aromatic index fa of the raw material oil composition of Comparative Example 7 were determined by the same methods as in Example 1. The results thereof are listed in Table 1.

«Step A»

The raw material oil composition of Comparative Example 7 was subjected to a coking treatment for coking by the same method as in Example 1, thereby obtaining a raw coke composition of Comparative Example 7.

«Step B»

The raw coke composition of Comparative Example 7 was heated at 650°C in a mixed gas stream in which the volume ratio between nitrogen and oxygen was 94:6, thereby obtaining a heat-treated raw coke composition of Comparative Example 7.
A treatment of setting the heating time from room temperature (25°C) to 650°C to 1 hour and 30 minutes, the retention time at 650°C to 1 hour, and the cooling time from 650°C to 400°C to 1 hour and 30 minutes and allowing the composition to be naturally cooled for 4 hours while maintaining the mixed gas stream after the temperature reached 400°C was performed as the heat treatment method.

«Step C»

The heat-treated raw coke composition of Comparative Example 7 was crushed by an air flow type jet mill such that the average particle diameter measured by the method described in (Measurement of average particle diameter) of Example 1 was in a range of 7.5 to 8.5 $\mu$m, thereby obtaining heat-treated raw coke powder of Comparative Example 7.
Further, the specific surface area, the volatile content, and the true density of the heat-treated raw coke powder of Comparative Example 7 were determined by the same methods as in Example 1. The results thereof are listed in Table 1.

«Step D and step E»

An synthetic graphite material for lithium-ion secondary battery negative electrodes of Comparative Example 7 was obtained by coating the heat-treated raw coke powder of Comparative Example 7 with the same coating material using the same method as in Example 1 and graphitizing the heat-treated raw coke powder using the same method as in Example 1.

(Comparative Example 8)

The aromatic content of the fluid catalytic cracking residual oil obtained in Example 1 and the hydrodesulfurized oil obtained in Example 2 were mixed at a mass ratio of 15:85, thereby obtaining a raw material oil composition of Comparative Example 8.
The normal paraffin content and the aromatic index fa of the raw material oil composition of Comparative Example 8 were determined by the same methods as in Example 1. The results thereof are listed in Table 1.

«Step A»

The raw material oil composition of Comparative Example 8 was subjected to a coking treatment for coking by the same method as in Example 1, thereby obtaining a raw coke composition of Comparative Example 8.

«Step B»

The raw coke composition of Comparative Example 8 was heated at 550°C in a mixed gas stream in which the volume ratio between nitrogen and oxygen was 83:17, thereby obtaining a heat-treated raw coke composition of Comparative Example 8.

A treatment of setting the heating time from room temperature (25°C) to 550°C to 1 hour, the retention time at 550°C to 1 hour, and the cooling time from 550°C to 400°C to 1 hour and allowing the composition to be naturally cooled for 4 hours while maintaining the mixed gas stream after the temperature reached 400°C was performed as the heat treatment method.

«Step C»

The heat-treated raw coke composition of Comparative Example 8 was crushed by an air flow type jet mill such that the average particle diameter measured by the method described in (Measurement of average particle diameter) of Example 1 was in a range of 7.5 to 8.5 μm, thereby obtaining heat-treated raw coke powder of Comparative Example 8.
Further, the specific surface area, the volatile content, and the true density of the heat-treated raw coke powder of Comparative Example 8 were determined by the same methods as in Example 1. The results thereof are listed in Table 1.

«Step D and step E»

An synthetic graphite material for lithium-ion secondary battery negative electrodes of Comparative Example 8 was obtained by coating the heat-treated raw coke powder of Comparative Example 8 with the same coating material using the same method as in Example 1 and graphitizing the heat-treated raw coke powder using the same method as in Example 1.

(Example 6)

An synthetic graphite material for lithium-ion secondary battery negative electrodes of Example 6, consisting of a mixture obtained by mixing the synthetic graphite material for lithium-ion secondary battery negative electrodes obtained in Example 1 with the synthetic graphite material for lithium-ion secondary battery negative electrodes obtained in Comparative Example 3 at a mass ratio of 50:50, was obtained.

(Example 7)

An synthetic graphite material for lithium-ion secondary battery negative electrodes of Example 7, formed of a mixture obtained by mixing the synthetic graphite material for lithium-ion secondary battery negative electrodes obtained in Example 1 with the synthetic graphite material for lithium-ion secondary battery negative electrodes obtained in Comparative Example 3 at a mass ratio of 30:70, was obtained.

(Example 8)

An synthetic graphite material for lithium-ion secondary battery negative electrodes of Example 8, formed of a mixture obtained by mixing the synthetic graphite material for lithium-ion secondary battery negative electrodes obtained in Example 1 with the synthetic graphite material for lithium-ion secondary battery negative electrodes obtained in Comparative Example 3 at a mass ratio of 20:80, was obtained.

<Preparation of battery for evaluation>

The lithium-ion secondary battery 10 shown in FIG. 1 was prepared as a battery for evaluation according to the method described below. As the negative electrode 11, the negative electrode current collector 12, the positive electrode 13, the positive electrode current collector 14, and the separator 15, those described below were used.

(Negative electrode 11 and negative electrode current collector 12)

Any of the synthetic graphite materials for lithium-ion secondary battery negative electrodes obtained in Examples 1 to 8 and Comparative Example 1 to 8, a carboxymethyl cellulose (CMC (BSH-6, manufactured by DKS Co., Ltd.)) aqueous solution as a binding agent adjusted to have a concentration of 1.5% by mass, and an aqueous solution in which styrene-butadiene rubber (SBR) as a binding agent was dispersed at a concentration of 48% by mass were mixed at a solid content mass ratio of 98:1:1, thereby obtaining a paste-like negative electrode mixture.
The entire one surface of copper foil having a thickness of 18 μm serving as the negative electrode current collector 12 was coated with the obtained negative electrode mixture, dried, and rolled to obtain a negative electrode sheet in which the negative electrode 11 which was a layer formed of the negative electrode mixture was formed on the negative electrode current collector 12.

The amount of the negative electrode mixture applied onto the negative electrode sheet per unit area was adjusted such that the mass of the graphite material reached approximately 10 mg/cm$^2$.

Thereafter, the negative electrode sheet was cut into a width of 32 mm and a length of 52 mm. Further, a part of the negative electrode 11 was scraped off in a direction perpendicular to the longitudinal direction of the sheet to expose the negative electrode current collector 12 functioning as a negative electrode lead plate.

(Positive electrode 13 and positive electrode current collector 14)

NCM523 (manufactured by Beijing Easpring Material Technology Co., Ltd.), which is a composite oxide of nickel, cobalt, manganese, and lithium with an average particle diameter of 12 $\mu$m, as a positive electrode material, polyvinylidene fluoride (KF #1120, manufactured by Kureha Corporation) as a binding agent, and acetylene black (DENKA BLACK (registered trademark), manufactured by Denka Company Limited) as a conductive assistant were mixed at a mass ratio of 89:6:5, N-methyl-2-pyrrolidinone was added thereto as a solvent, and the mixture was kneaded, thereby obtaining a paste-like positive electrode mixture.

The entire one surface of aluminum foil having a thickness of 30 $\mu$m serving as the positive electrode current collector 14 was coated with the obtained positive electrode mixture, dried, and rolled to obtain a positive electrode sheet in which the positive electrode 13 which was a layer formed of the positive electrode mixture was formed on the positive electrode current collector 14.

The amount of the positive electrode mixture applied onto the positive electrode sheet per unit area was adjusted such that the mass of NCM523 reached approximately 17.2 mg/cm$^2$.

Thereafter, the positive electrode sheet was cut into a width of 30 mm and a length of 50 mm. Further, a part of the positive electrode 13 was scraped off in a direction perpendicular to the longitudinal direction of the sheet to expose the positive electrode current collector 14 functioning as a positive electrode lead plate.

(Separator 15)

As the separator 15, cellulose-based non-woven fabric (TF40-50, manufactured by Nippon Kodoshi Corporation) was used. First, the negative electrode sheet in which the negative electrode 11, the negative electrode current collector 12, and the negative electrode lead plate were integrated with each other, the positive electrode sheet in which the positive electrode 13, the positive electrode current collector 14, and the positive electrode lead plate were integrated with each other, the separator 15, and other members used for the lithium-ion secondary battery 10 were dried in order to prepare the lithium-ion secondary battery 10 shown in FIG. 1. Specifically, the negative electrode sheet and the positive electrode sheet were dried at 120°C under reduced pressure for 12 hours or longer. Further, the separator 15 and other members were dried at 70°C under reduced pressure for 12 hours or longer.

Next, the negative electrode sheet, the positive electrode sheet, the separator 15, and other members which had been dried were assembled in an argon gas circulation type glove box at which the dew point was controlled to -60°C or lower. In this manner, as shown in FIG. 1, the positive electrode 13 and the negative electrode 11 were laminated to face each other through the separator 15 to obtain a single-layer electrode body fixed with polyimide tape (not shown). Further, the negative electrode sheet and the positive electrode sheet were laminated such that the peripheral edge portion of the laminated positive electrode sheet was disposed to be surrounded by the inside of the peripheral edge portion of the negative electrode sheet.

Next, the single-layer electrode body was accommodated in the aluminum laminate exterior 16, and an electrolyte solution was injected thereinto. An electrolyte solution obtained by dissolving lithium hexafluorophosphate (LiPF$_6$) as an electrolyte in a solvent at a concentration of 1 mol/L and further mixing vinylene carbonate (VC) with the solution at a concentration of 1% by mass was used as the electrolyte solution. A solvent obtained by mixing ethylene carbonate (EC), dimethyl carbonate (DMC), and ethyl methyl carbonate (EMC) at a volume ratio of 30:40:30 was used as the solvent.

Thereafter, the aluminum laminate exterior 16 was heat-fused in a state where the positive electrode lead plate and the negative electrode lead plate protruded. The sealed lithium-ion secondary batteries 10 of Examples 1 to 10 and Comparative Examples 1 to 10 were obtained by performing the above-described steps.

<Charge and discharge test of battery for evaluation>

A charge and discharge test described below was performed on each of the lithium-ion secondary batteries 10 of Examples 1 to 8 and Comparative Examples 1 to 8.

First, a preliminary test for detecting abnormalities in the batteries was performed. That is, each battery was placed in a thermostatic chamber at 25°C, charged with a constant current of 4 mA until the battery voltage reached 4.2 V, paused for 10 minutes, and discharged with the same constant current until the battery voltage reached 3.0 V. These charge, pause, and discharge were defined as one charge and discharge cycle, and the preliminary test was performed by repeating the charge and discharge cycle three times under the same conditions.

It was confirmed that all the batteries of Examples 1 to 10 and Comparative Examples 1 to 10 did not have abnormalities by performing this preliminary test. Thereafter, the following main test was performed. The preliminary test is not included in the number of cycles of the main test.

In the main test, each battery was placed in a thermostatic chamber at 25°C, charged with a constant current at a constant voltage by setting the charging current to 30 mA, the charging voltage to 4.2 V, and the charging time to 3 hours, paused for 10 minutes, and discharged with the same charging current (30 mA) at a constant current until the battery voltage reached 3.0 V. These charge, pause, and discharge were defined as one charge and discharge cycle, and the discharge capacity in the third cycle was defined as the "initial discharge capacity" by repeating the charge and discharge cycle three times under the same conditions.

Next, the battery was charged with a constant current at a constant voltage by setting the charging current to 160 mA, the charging voltage to 4.2 V, and the charging time to 3 hours in the same thermostatic chamber, paused for 10 minutes, and discharged with a constant current of 30 mA until the battery voltage reached 3.0 V. These charge, pause, and discharge were defined as one charge and discharge cycle, and the charge and discharge cycle was repeated 100 times under the same conditions as described above. Thereafter, the battery was placed in a thermostatic chamber and allowed to stand still for 5 hours, the charge and discharge cycle was repeated three times under the same conditions as those for the charge and discharge cycle from which the initial discharge capacity was determined, and the discharge capacity in the third cycle was defined as "discharge capacity after quick charging was repeated".

As an index showing the capacity degradation after quick charging was repeated, the retention rate (%) of "discharge capacity after quick charging was repeated" with respect to "initial discharge capacity" described above was calculated according to Equation (1). The results thereof are listed in Table 1.

$$\begin{Bmatrix} \text{Discharge capacity} \\ \text{retention rate after} \\ \text{quick charging was} \\ \text{repeated (\%)} \end{Bmatrix} = \frac{\begin{Bmatrix} \text{Discharge capacity} \\ \text{after quick charging} \\ \text{was repeated (mAh)} \end{Bmatrix}}{\begin{Bmatrix} \text{Initial discharge} \\ \text{capacity (mAh)} \end{Bmatrix}} \times 100 \qquad \cdots (1)$$

[Table 1]

| | Raw material oil composition | | Heat-treated raw coke powder | | | Characteristics of battery |
|---|---|---|---|---|---|---|
| | Normal paraffin content (% by mass) | Aromatic index fa | Specific surface area (m$^2$/g) | Volatile content (%) | True density (g/cm$^3$) | Discharge capacity retention rate after quick charging was repeated (%) |
| Example 1 | 9.8 | 0.47 | 95 | 0.92 | 1.39 | 81.3 |
| Example 2 | 5.0 | 0.65 | 54 | 0.1 | 1.68 | 76.6 |
| Example 3 | 5.2 | 0.37 | 71 | 0.32 | 1.33 | 78.3 |
| Example 4 | 17 | 0.62 | 26 | 3.31 | 1.56 | 72.9 |
| Example 5 | 20 | 0.3 | 12 | 3.6 | 1.26 | 71.2 |
| Comparative Example 1 | 9.8 | 0.47 | 9.6 | 3.71 | 1.41 | 47.4 |
| Comparative Example 2 | 9.8 | 0.47 | 6.1 | 0.08 | 1.91 | 31.4 |
| Comparative Example 3 | 9.8 | 0.47 | 10.2 | 5.13 | 1.39 | 45.1 |
| Comparative Example 4 | 18 | 0.22 | 7.3 | 2.66 | 1.22 | 38.1 |

(continued)

|  | Raw material oil composition | | Heat-treated raw coke powder | | | Characteristics of battery |
| --- | --- | --- | --- | --- | --- | --- |
|  | Normal paraffin content (% by mass) | Aromatic index fa | Specific surface area ($m^2$/g) | Volatile content (%) | True density (g/$cm^3$) | Discharge capacity retention rate after quick charging was repeated (%) |
| Comparative Example 5 | 3.2 | 0.48 | 6.2 | 1.68 | 1.73 | 36.0 |
| Comparative Example 6 | 8.1 | 0.72 | 8.8 | 0.49 | 1.78 | 42.9 |
| Comparative Example 7 | 3.8 | 0.76 | 8.2 | 0.07 | 1.79 | 40.3 |
| Comparative Example 8 | 24 | 0.18 | 5.3 | 3.87 | 1.19 | 29.3 |
| Example 6 | - | - | - | - | - | 78.0 |
| Example 7 | - | - | - | - | - | 74.1 |
| Example 8 | - | - | - | - | - | 70.1 |

As listed in Table 1, in the methods for producing the synthetic graphite materials for lithium-ion secondary battery negative electrodes of Examples 1 to 5, the heat-treated raw coke powder having a specific surface area of 10.5 $m^2$/g or greater was used. Further, the volatile content of the heat-treated raw coke powder was less than 3.71 %, and the true density thereof was greater than 1.22 g/$cm^3$ and less than 1.73 g/$cm^3$.

In the lithium-ion secondary batteries of Examples 1 to 5, "discharge capacity retention rate (%) after quick charging was repeated" was 70% or greater. As described above, it was confirmed that in the lithium-ion secondary batteries obtained by using the negative electrodes containing the synthetic graphite materials for lithium-ion secondary battery negative electrodes of Examples 1 to 5, the discharge capacity was difficult to degrade even in a case where quick charging was repeated.

Further, it was confirmed that even in the lithium-ion secondary batteries of Examples 6 to 8, obtained by using the negative electrode containing a combination of the synthetic graphite material for lithium-ion secondary battery negative electrodes of Example 1 for which the heat-treated raw coke powder having a specific surface area of 10.5 $m^2$/g or greater was used and another synthetic graphite material (the synthetic graphite material for lithium-ion secondary battery negative electrode of Comparative Example 3) having a specific surface area of less than 10.5 $m^2$/g, "discharge capacity retention rate (%) after quick charging was repeated" was 70% or greater and the discharge capacity was difficult to degrade even in a case where quick charging was repeated.

Meanwhile, the synthetic graphite material obtained from heat-treated raw coke powder having a specific surface area of less than 10.5 $m^2$/g was used in the lithium-ion secondary battery negative electrodes of Comparative Examples 1 to 8. It was confirmed that in all the lithium-ion secondary batteries of Comparative Examples 1 to 8, "discharge capacity retention rate (%) after quick charging was repeated" was less than the values of the lithium-ion secondary batteries of Examples 1 to 8 and the discharge capacity was likely to be degraded.

[Industrial Applicability]

The lithium-ion secondary battery having the negative electrode that contains the synthetic graphite material obtained by the method for producing the synthetic graphite material for lithium-ion secondary battery negative electrodes according to the present invention has a discharge capacity that is difficult to degrade even in a case where quick charging is repeated. Therefore, the lithium-ion secondary battery having the negative electrode that contains the synthetic graphite material obtained by the method for producing the synthetic graphite material for lithium-ion secondary battery negative electrodes according to the present invention can be preferably used for industrial purposes such as electric vehicle applications and system cooperation applications of natural energy.

[Reference Signs List]

10: Lithium-ion secondary battery
11: Negative electrode
12: Negative electrode current collector
13: Positive electrode
14: Positive electrode current collector
15: Separator
16: Aluminum laminate exterior

While preferred embodiments of the invention have been described and illustrated above, it should be understood that these are examples of the invention and are not to be considered as limiting. Additions, omissions, substitutions, and other modifications can be made without departing from the scope of the invention. Accordingly, the present invention is not to be considered as being limited by the foregoing description and is only limited by the scope of the appended claims.

**Claims**

1. A method for producing an synthetic graphite material for lithium-ion secondary battery negative electrodes, comprising:

    a step of performing a coking treatment on a raw material oil composition by carrying out a delayed coking process to generate a raw coke composition;
    a step of performing a heat treatment on the raw coke composition to obtain a heat-treated raw coke composition;
    a step of crushing the heat-treated raw coke composition to obtain heat-treated raw coke powder;
    a step of coating the heat-treated raw coke powder with a coating material to obtain coated heat-treated raw coke powder; and
    a step of graphitizing the coated heat-treated raw coke powder to obtain an synthetic graphite material for lithium-ion secondary battery negative electrodes,
    wherein a nitrogen adsorption specific surface area of the heat-treated raw coke powder is 10.5 m$^2$/g or greater.

2. The method for producing an synthetic graphite material for lithium-ion secondary battery negative electrodes according to Claim 1,

    wherein a volatile content of the heat-treated raw coke powder is less than 3.71%, and
    a true density of the heat-treated raw coke powder is greater than 1.22 g/cm$^3$ and less than 1.73 g/cm$^3$.

3.  The method for producing an synthetic graphite material for lithium-ion secondary battery negative electrodes according to Claim 1 or 2,
    wherein a temperature of the heat treatment in the step of obtaining the heat-treated raw coke composition is 500°C or higher and 700°C or lower.

4. The method for producing an synthetic graphite material for lithium-ion secondary battery negative electrodes according to Claim 1 or 2,

    wherein a content of normal paraffin in the raw material oil composition is in a range of 5% to 20% by mass with respect to a total amount of the raw material oil composition, and
    an aromatic index fa determined by a Knight method is in a range of 0.3 to 0.65.

5. An synthetic graphite material for lithium-ion secondary battery negative electrodes, which is obtained by the production method according to Claim 1 or 2.

6. A negative electrode for lithium-ion secondary batteries, comprising:
    the synthetic graphite material for lithium-ion secondary battery negative electrodes according to Claim 5.

7. A lithium-ion secondary battery comprising:

the negative electrode for lithium-ion secondary batteries according to Claim 6.

FIG. 1

EP 4 358 190 A1

## INTERNATIONAL SEARCH REPORT

| | International application No. |
|---|---|
| | **PCT/JP2022/023950** |

### A. CLASSIFICATION OF SUBJECT MATTER

***H01M 4/587***(2010.01)i; ***C01B 32/205***(2017.01)i; ***H01M 4/36***(2006.01)i
FI: H01M4/587; C01B32/205; H01M4/36 C

According to International Patent Classification (IPC) or to both national classification and IPC

### B. FIELDS SEARCHED

Minimum documentation searched (classification system followed by classification symbols)

H01M4/587; C01B32/205; H01M4/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 11-343108 A (OSAKA GAS CO LTD) 14 December 1999 (1999-12-14) paragraph [0014], examples 1, 15, 18 | 5-7 |
| A | | 1-4 |
| X | JP 2011-60467 A (KANSAI COKE & CHEM CO LTD) 24 March 2011 (2011-03-24) production examples 1, 2 | 5-7 |
| A | | 1-4 |
| A | JP 2020-111489 A (JX NIPPON OIL & ENERGY CORP) 27 July 2020 (2020-07-27) claims, examples | 1-7 |
| A | JP 2009-13012 A (NIPPON OIL CORP) 22 January 2009 (2009-01-22) claims, examples | 1-7 |
| A | JP 2007-19257 A (JAPAN ENERGY CORP) 25 January 2007 (2007-01-25) claims, paragraphs [0023], [0024] | 1-7 |
| A | JP 2000-3708 A (OSAKA GAS CO LTD) 07 January 2000 (2000-01-07) claims, examples | 1–7 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 August 2022** | **06 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/023950**

| Patent document cited in search report | | | Publication date (day/month/year) | Patent family member(s) | Publication date (day/month/year) |
|---|---|---|---|---|---|
| JP | 11-343108 | A | 14 December 1999 | US 2004/0151837 A1 paragraph [0014], examples 1, 15, 18<br>WO 1997/018160 A1<br>EP 861804 A1<br>CA 2238286 A<br>KR 10-0722071 B1 | |
| JP | 2011-60467 | A | 24 March 2011 | (Family: none) | |
| JP | 2020-111489 | A | 27 July 2020 | US 2022/0093924 A1 claims, examples<br>WO 2020/149252 A1<br>EP 3912961 A1<br>CN 113365942 A<br>KR 10-2021-0110830 A | |
| JP | 2009-13012 | A | 22 January 2009 | US 2010/0214722 A1 claims, examples<br>WO 2009/005170 A1<br>EP 2172422 A1<br>KR 10-2010-0040906 A<br>CN 101730661 A | |
| JP | 2007-19257 | A | 25 January 2007 | (Family: none) | |
| JP | 2000-3708 | A | 07 January 2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021101703 A
- JP 5415684 B
- JP 2009054469 A
- JP 2003151551 A
- JP 2003132884 A
- JP 5062596 B
- JP 4666876 B

### Non-patent literature cited in the description

- **YOKONO ; SANADA.** Characterization of Pitch II. Chemical Structure. *Carbon,* 1981, (105), 73-81
- Determination of the Specific Surface Area of Powders (Solids) by Gas Adsorption-BET Method. *JIS Z,* 2013, vol. 8830
- Coal and coke-methods for proximate analysis. *JIS M,* 2004, vol. 8812
- Coke-test method. *JIS K,* 2004, vol. 2151
- *Journal of The Fuel Society of Japan,* 1979, vol. 58 (642), 257-263
- Representation of results of particle size analysis - Part 2: calculation of average particle sizes and moments from particle size distribution. *JIS Z,* 2001, 8819-2